(19) Europäisches Patentamt
European Patent Office
Office européen des brevets

(11) EP 3 031 607 B1

(12) EUROPEAN PATENT SPECIFICATION

(45) Date of publication and mention of the grant of the patent:
**07.04.2021 Bulletin 2021/14**

(21) Application number: **14833945.0**

(22) Date of filing: **07.08.2014**

(51) Int Cl.:
***B32B 27/08*** *(2006.01)* ***B32B 27/34*** *(2006.01)*
***B29C 45/16*** *(2006.01)* ***B29C 49/22*** *(2006.01)*
***B29C 49/64*** *(2006.01)* ***B65D 1/00*** *(2006.01)*
***C08G 63/672*** *(2006.01)* ***C08L 67/02*** *(2006.01)*
***C08L 77/06*** *(2006.01)* ***B29K 67/00*** *(2006.01)*
***B29K 77/00*** *(2006.01)* ***B29L 9/00*** *(2006.01)*

(86) International application number:
**PCT/JP2014/070826**

(87) International publication number:
**WO 2015/020132 (12.02.2015 Gazette 2015/06)**

(54) **MULTILAYER MOLDING**

MEHRSCHICHTFORMUNG

MOULAGE MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2013 JP 2013166964**
**12.06.2014 JP 2014121081**

(43) Date of publication of application:
**15.06.2016 Bulletin 2016/24**

(73) Proprietor: **Mitsubishi Gas Chemical Company, Inc.**
**Tokyo 100-8324 (JP)**

(72) Inventors:
- **SATO Kazunobu**
  **Tokyo 100-8324 (JP)**
- **IWASAKI Atsuko**
  **Hiratsuka-shi**
  **Kanagawa 254-0016 (JP)**
- **MIYABE Takanori**
  **Hiratsuka-shi**
  **Kanagawa 254-0016 (JP)**
- **SUNADA Tomoe**
  **Hiratsuka-shi**
  **Kanagawa 254-0016 (JP)**
- **ARAI Hirokatsu**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 1 475 308**
**WO-A1-2013/002075**
**JP-A- 2003 291 937**
**JP-A- 2006 111 001**
**JP-A- 2006 111 718**
**JP-A- 2006 111 718**
**JP-A- 2011 037 134**
**JP-A- 2011 037 989**
**JP-A- 2011 219 667**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 031 607 B1

## Description

TECHNICAL FIELD

The present invention relates to a multilayer molding, and specifically relates to a multilayer molding, in which delamination of the multilayer molding at the time of transport thereof or impact caused by drop is prevented by improving interlayer adhesion between the surface layer and the core layer, and in which delamination can be avoided without employing a shape in which the concavo-convex portion or bent portion is few, and which realizes high design flexibility.

BACKGROUND ART

Currently, plastic vessels (bottles, etc.) mainly made of polyester such as polyethylene terephthalate (PET) are widely used for tea, fruit juice drink, carbonated drink, etc. Further, the ratio of small plastic bottles in plastic vessels has been increasing over time. When the bottle is miniaturized, the ratio of the surface area per unit volume increases, and therefore, when the bottle is miniaturized, the expiration date of the content tends to be shortened. Moreover, recently, with increase in the range of utilization of plastic vessels, reduction in the thickness and weight of vessels has been promoted, and it has been demanded to further improve barrier properties.

In response to the above-described demand, as methods for imparting gas barrier properties to vessels, barrier-coated bottles, multilayer sheets, blend sheets, multilayer vessels, etc., which are obtained by applying a carbon coat, deposition or barrier resin to multilayer bottles made of a thermoplastic polyester resin and a gas-barrier resin, blend bottles or thermoplastic polyester resin single layer bottles, have been developed.

As one example of multilayer bottles, a bottle obtained by performing biaxial stretch blow molding of a parison having a three-layer or five-layer structure, which is obtained by injecting a thermoplastic polyester resin such as PET forming the surface layer and a thermoplastic gas-barrier resin such as polymethaxylylene adipamide (polyamide MXD6) to fill a mold cavity, has been put to practical use.

In addition, a resin having oxygen trapping function, which traps oxygen in a vessel while blocking oxygen from the outside of the vessel, has been developed, and it is applied to multilayer bottles. As a bottle having oxygen trapping properties, a multilayer bottle in which polyamide MXD6 is mixed with a transition metal-based catalyst to be used as a gas barrier layer is preferable from the viewpoint of the oxygen absorption rate, transparency, strength, moldability, etc.

The above-described multilayer bottle is utilized as a vessel for beer, tea, carbonated drink, etc. because of its good gas barrier properties. By using the multilayer bottle for such intended use, the quality of the content is maintained and the shelf life is improved. Meanwhile, the commercial value may be reduced because delamination may be caused among different types of resins, for example, among the outer surface layer, the inner surface layer and the core layer.

As a method for remedying the above-described problem, a technique of improving delamination resistance, in which a roughly-mixed resin is positioned between layers by using a back-flow control apparatus which can provide a constant amount of back-flow to the gas barrier layer side at the time of finally injecting a resin constituting the surface layer into a mold cavity, is disclosed (Patent Document 1).

Moreover, a method for suppressing delamination by using a mixed layer made of a polyester resin and a gas-barrier resin as a core layer is disclosed (Patent Documents 2 and 3).

As one example of a multilayer sheet and multilayer vessel obtained by molding the multilayer sheet, a laminate in which an adhesive layer is provided between a polyester-based resin layer and a gas-barrier resin layer is known (Patent Document 4).

Patent Document 5 discloses a heating polyester resin structure having a resin layer containing a polyester resin having a cyclic acetal skeleton in a diol unit.

PRIOR ART DOCUMENTS

PATENT DOCUMENTS

Patent Document 1: Japanese Laid-Open Patent Publication No. 2000-254963
Patent Document 2: Japanese Patent No. 3788442
Patent Document 3: Japanese Laid-Open Patent Publication No. 2007-223667
Patent Document 4: International Publication WO2003/043819 pamphlet
Patent Document 5: JP 2006-111718 A

## SUMMARY OF THE INVENTION

## PROBLEMS TO BE SOLVED BY THE INVENTION

In the method described in Patent Document 1 disclosing the improvement of delamination resistance of the multilayer bottle, there is a problem that a special apparatus is required. Further, in the method of using the mixed layer made of a polyester resin and a gas-barrier resin as the core layer, there is not only a problem of reduction in transparency, but also a problem of reduction in gas barrier properties due to addition of a large amount of the polyester resin.

In the method described in Patent Document 4, the adhesive layer is provided between the surface layer and the gas barrier layer, and for this reason, an extruder for forming the adhesive layer is required, resulting in increase of the production cost.

The purpose of the present invention is to solve the above-described problems to provide a multilayer molding having excellent transparency and gas barrier properties, wherein delamination due to drop or impact does not easily occur.

## MEANS FOR SOLVING THE PROBLEMS

The present inventors diligently made researches on delamination resistance of the multilayer molding, and found that a multilayer molding, in which at least one resin layer in contact with a layer made by mixing a polyamide with a specific polyester contains a predetermined amount of a polyester resin, can improve adhesiveness between layers and prevent delamination at the time of drop or impact and has excellent transparency and gas barrier properties, and thus the present invention was achieved.

Specifically, the present invention is as follows:

<1> A resin-made multilayer molding including three or more resin layers, the multilayer molding being characterized in that: at least one resin layer of the multilayer molding is configured from a mixed resin (B) containing, at a ratio (C)/(D) = 99/1 to 10/90 by weight, a polyamide resin (C) obtained by polymerizing a diamine component containing 70 mol% or more of m-xylylenediamine and a dicarboxylic acid component containing 70 mol% or more of adipic acid, and a polyester resin (D) containing a dicarboxylic acid unit and a diol unit, 1 to 80 mol% of the diol unit having a cyclic acetal skeleton; and at least one resin layer in contact with a layer configured from the mixed resin (B) and the resin layers forming both the surfaces of the multilayer molding are configured from a resin containing 70 wt% or more of a thermoplastic polyester resin (A) obtained by polymerizing a dicarboxylic acid component containing 80 mol% or more of terephthalic acid and a diol component containing 80 mol% or more of ethylene glycol.

<2> The multilayer molding according to item <1>, wherein the diol unit having the cyclic acetal skeleton of the polyester resin (D) is a diol unit derived from a diol represented by general formula (1):

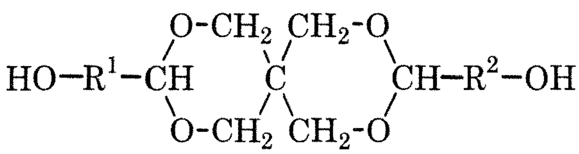 (1)

wherein $R^1$ and $R^2$ each independently represent a divalent hydrocarbon group selected from the group consisting of a $C_{1-10}$ divalent aliphatic hydrocarbon group, a $C_{3-10}$ divalent alicyclic hydrocarbon group and a $C_{6-10}$ divalent aromatic hydrocarbon group,
or general formula (2):

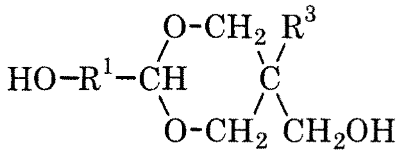 (2)

wherein: $R^1$ is the same as above; and $R^3$ represents a hydrocarbon group selected from the group consisting of a $C_{1-10}$ aliphatic hydrocarbon group, a $C_{3-10}$ alicyclic hydrocarbon group and a $C_{6-10}$ aromatic hydrocarbon group.

<3> The multilayer molding according to item <1>, wherein the diol unit having the cyclic acetal skeleton of the

polyester resin (D) is a diol unit derived from 3,9-bis(1,1-dimethyl-2-hydroxyethyl)-2,4,8,10-tetraoxaspiro[5.5]undecane or a diol unit derived from 5-methylol-5-ethyl-2-(1,1-dimethyl-2-hydroxyethyl)-1,3-dioxane.

<4> The multilayer molding according to any one of items <1> to <3>, wherein the diol unit other than the diol unit having the cyclic acetal skeleton of the polyester resin (D) is a diol unit derived from at least one diol selected from the group consisting of ethylene glycol, diethylene glycol, trimethylene glycol, 1,4-butanediol and 1,4-cyclohexanedimethanol.

<5> The multilayer molding according to any one of items <1> to <4>, wherein 1 to 100 mol% of the dicarboxylic acid unit of the polyester resin (D) is a unit derived from a dicarboxylic acid having a benzene skeleton and 0 to 99 mol% of the dicarboxylic acid unit of the polyester resin (D) is a unit derived from a dicarboxylic acid having a naphthalene skeleton.

<6> The multilayer molding according to any one of items <1> to <5>, wherein the dicarboxylic acid unit of the polyester resin (D) is a dicarboxylic acid unit derived from at least one dicarboxylic acid selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid.

<7> The multilayer molding according to any one of items <1> to <6>, wherein the polyamide resin (C) is a solid phase polymerized polyamide resin obtained by melt-polycondensing the diamine component containing 70 mol% or more of m-xylylenediamine and the dicarboxylic acid component containing 70 mol% or more of adipic acid and further subjecting the obtained polyamide resin to solid phase polymerization.

<8> The multilayer molding according to any one of items <1> to <7>, wherein the mixed resin (B) further contains 0.01 to 0.10 wt% of at least one metal element selected from the group consisting of a transition metal belonging to Group VIII of the periodic table, manganese, copper and zinc.

<9> The multilayer molding according to any one of items <1> to <8>, wherein the weight ratio of the mixed resin (B) relative to the total weight of the multilayer molding is 1 to 30 wt%.

<10> The multilayer molding according to any one of items <1> to <9>, comprising: an outer surface layer; an inner surface layer; and at least one core layer positioned between the outer surface layer and the inner surface layer, which is produced using an injection molding machine having a surface layer-side injection cylinder and a core side injection cylinder, and which is a hollow vessel obtained by blow-molding a multilayer parison, which is obtained by injecting the resin containing 70 wt% or more of the thermoplastic polyester resin (A) from the surface layer-side injection cylinder to form the outer surface layer and the inner surface layer and injecting the mixed resin (B) from the core side injection cylinder to form the at least one core layer.

<11> The multilayer molding according to item <10>, which is a hollow vessel obtained by blow-molding a parison having a three-layer structure, which is formed by filling a mold cavity by: injecting the resin containing 70 wt% or more of the thermoplastic polyester resin (A) from the surface layer-side injection cylinder; then injecting the mixed resin (B) from the core side injection cylinder and injecting the thermoplastic polyester resin (A) from the surface layer-side injection cylinder at the same time; and then injecting the thermoplastic polyester resin (A) from the surface layer-side injection cylinder.

<12> The multilayer molding according to item <10>, which is a hollow vessel obtained by blow-molding a parison having a five-layer structure, which is formed by filling a mold cavity by: injecting the resin containing 70 wt% or more of the thermoplastic polyester resin (A) from the surface layer-side injection cylinder; then injecting the mixed resin (B) from the core side injection cylinder; and then injecting the thermoplastic polyester resin (A) from the surface layer-side injection cylinder.

<13> The multilayer molding according to any one of items <11> to <12>, which is a hollow vessel obtained by heating the surface of the parison to 80 to 120°C, followed by blow molding thereof.

<14> The multilayer molding according to any one of items <1> to <9>, comprising: both surface layers; and at least one core layer positioned between the both surface layers, which is produced using a multilayer sheet-forming machine having at least one surface layer-side extrusion cylinder and at least one core side extrusion cylinder, and which is a multilayer sheet having a thickness of 100 to 2000 μm obtained by: extruding the resin containing 70 wt% or more of the thermoplastic polyester resin (A) from the surface layer-side extrusion cylinder, or the surface layer-side extrusion cylinder and at least one of the core side extrusion cylinder to form a resin layer; and extruding the mixed resin (B) from at least one of the core side extrusion cylinder to form the at least one core layer in contact with the resin layer made of resin containing the thermoplastic polyester resin (A).

<15> The multilayer molding according to item <14>, which is a multilayer sheet having a three-layer structure obtained by extruding the resin containing 70 wt% or more of the thermoplastic polyester resin (A) from the surface layer-side extrusion cylinder and extruding the mixed resin (B) from the core side extrusion cylinder.

<16> The multilayer molding according to item <14>, which is a multilayer sheet having a five-layer structure obtained by using a multilayer sheet-forming machine having a surface layer-side extrusion cylinder, an interlayer-side extrusion cylinder and a central layer-side extrusion cylinder, wherein: the resin containing 70 wt% or more of the thermoplastic polyester resin (A) is extruded from the surface layer-side extrusion cylinder; the mixed resin (B) is

extruded from the interlayer-side extrusion cylinder or the central layer-side extrusion cylinder; and the resin containing 70 wt% or more of the thermoplastic polyester resin (A) is extruded from the interlayer-side extrusion cylinder or the central layer-side extrusion cylinder from which the mixed resin (B) is not extruded.

<17> The multilayer molding according to any one of items <14> to <16>, which is a multilayer sheet vessel obtained by rapidly heating the surface of the multilayer sheet to 90 to 250°C to be softened and then molding the multilayer sheet using a mold having a desired shape.

<18> The multilayer molding according to item <17>, wherein the haze value of a molded product is 15% or less.

## ADVANTAGEOUS EFFECT OF THE INVENTION

According to the present invention, it is possible to obtain a multilayer molding having excellent transparency and gas barrier properties, wherein delamination does not easily occur, and therefore the present invention has significance for industry.

## EMBODIMENTS FOR CARRYING OUT THE INVENTION

Hereinafter, the mode for carrying out the present invention (hereinafter just referred to as "the present embodiment") will be described in detail.

In the resin-made multilayer molding of the present invention, at least one resin layer thereof is configured from a mixed resin (B) containing, at a ratio (C)/(D) = 99/1 to 10/90 by weight, a polyamide resin (C) obtained by polymerizing a diamine component containing 70 mol% or more of m-xylylenediamine and a dicarboxylic acid component containing 70 mol% or more of adipic acid, and a polyester resin (D) containing a dicarboxylic acid unit and a diol unit, 1 to 80 mol% of the diol unit having a cyclic acetal skeleton, and at least one resin layer in contact with a layer configured from the mixed resin (B) is configured from a resin containing 70 wt% or more of a thermoplastic polyester resin (A) obtained by polymerizing a dicarboxylic acid component containing 80 mol% or more of terephthalic acid and a diol component containing 80 mol% or more of ethylene glycol (hereinafter abbreviated as "the polyester resin (A)").

The resin-made multilayer molding of the present invention is a multilayer molding including three or more resin layers, wherein the resin layers forming both the surfaces of the molding are configured from a resin containing 70 wt% or more of the polyester resin (A). It is advantageous to use a resin containing 70 wt% or more of the polyester resin (A) as the resin layers forming the surfaces in terms of transparency, mechanical strength and moldability.

The polyester resin (A) to be used in the multilayer molding of the present embodiment is a polyester obtained by polymerizing a dicarboxylic acid component containing 80 mol% or more, and preferably 90 mol% or more of terephthalic acid and a diol component containing 80 mol% or more, and preferably 90 mol% or more of ethylene glycol. When the multilayer molding is used as a vessel, by using the polyester resin (A) for the inner surface layer, a molding having excellent aroma retaining properties can be obtained.

As the polyester resin (A), polyethylene terephthalate can be suitably used. In this case, excellent transparency, mechanical strength, injection-molding processability and stretch blow moldability, all of which are possessed by polyethylene terephthalate, can be exerted.

As dicarboxylic acid components other than terephthalic acid, isophthalic acid, diphenyl ether-4,4-dicarboxylic acid, naphthalene-1,4- or 2,6-dicarboxylic acid, adipic acid, sebacic acid, decane-1,10-carboxylic acid and hexahydroterephthalic acid can be used. Further, as diol components other than ethylene glycol, propylene glycol, 1,4-butanediol, neopentyl glycol, diethylene glycol, cyclohexane dimethanol, 2,2-bis(4-hydroxyphenyl)propane, 2,2-bis(4-hydroxyethoxyphenyl)propane and the like can be used. Moreover, as a raw material monomer for the polyester resin (A), oxyacids such as p-oxybenzoic acid can also be used.

The limiting viscosity of the polyester resin (A) is 0.55 to 1.50 (dL/g), and preferably 0.65 to 1.40 (dL/g). When the limiting viscosity is 0.55 (dL/g) or more as described above, it is possible to obtain a multilayer parison in a transparent amorphous state, and the mechanical strength of a multilayer molding obtained is satisfactory. When the limiting viscosity is 1.50 (dL/g) or less as described above, it is possible to avoid troubles of molding caused by increase in the viscosity.

Further, it is possible to use and blend another thermoplastic resin in the polyester resin (A) within a range in which the features of the present invention are not impaired. Examples of such thermoplastic resins include thermoplastic polyester resins such as polyethylene-2,6-naphthalene dicarboxylate, polyolefin-based resins, polycarbonate, polyacrylonitrile, polyvinyl chloride and polystyrene. It is also possible to use end materials generated in the process of producing the multilayer molding of the present invention as other thermoplastic resins. The blending amount of the other thermoplastic resins is less than 30 wt%, preferably 20 wt% or less, and more preferably 10 wt% or less of the resin constituting the resin layer including the polyester resin (A).

In the multilayer molding of the present embodiment, at least one layer is formed by a mixed resin (B) containing a polyamide resin (C) and a specific polyester resin (D) described below.

The polyamide resin (C) is obtained by polymerizing a diamine component containing 70 mol% or more of m-xylylenediamine and a dicarboxylic acid component containing 70 mol% or more of adipic acid. When the amount of m-xylylenediamine in the diamine component is 70 mol% or more, excellent gas barrier properties can be maintained. When the amount of adipic acid in the dicarboxylic acid component is 70 mol% or more, it is possible to prevent reduction in gas barrier properties and crystallizability.

As the polyamide resin (C), polymethaxylylene adipamide (hereinafter referred to as "polyamide MXD6") is suitably used because excellent coinjection moldability and co-stretch blow moldability are exerted with the polyester resin (A) (polyethylene terephthalate).

Examples of diamine components other than m-xylylenediamine to be used include, but are not limited to: aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin and bis(aminomethyl)tricyclodecane; and aromatic ring-containing diamines such as bis(4-aminophenyl)ether, p-phenylenediamine, p-xylylenediamine and bis(aminomethyl)naphthalene.

Examples of dicarboxylic acid components other than adipic acid to be used include, but are not limited to, suberic acid, azelaic acid, sebacic acid, 1,10-decanedicarboxylic acid, terephthalic acid, isophthalic acid and 2,6-naphthalenedicarboxylic acid.

Further, the polyamide resin (C) may contain a small amount of monoamine or monocarboxylic acid to be used as a molecular weight modifier at the time of the production.

The above-described polyamide resin (C) is produced by the melt polycondensation (melt polymerization) method or carrying out melt polycondensation and then solid phase polymerization. In one example of the melt polycondensation method, a nylon salt consisting of a diamine component and a dicarboxylic acid component is heated under pressure in the presence of water and then polymerized in a molten state while removing the water added and condensation water. The polyamide resin (C) can also be produced by a method in which a diamine component is directly added to a dicarboxylic acid component in a molten state to be subjected to polycondensation. In this case, the diamine component is continuously added to the dicarboxylic acid component in order to keep the reaction system in a homogeneous liquid state while allowing the polycondensation to proceed with the reaction system being heated in order to prevent the reaction temperature from being lowered below the melting points of oligoamides and polyamides produced.

In order to obtain effects of promoting an amidation reaction and preventing coloring at the time of polycondensation, a phosphorus atom-containing compound may be added to the polycondensation system of the polyamide resin (C). Examples of the phosphorus atom-containing compound include dimethylphosphinic acid, phenyl methyl phosphinic acid, hypophosphoric acid, sodium hypophosphite, potassium hypophosphite, lithium hypophosphite, ethyl hypophosphite, phenylphosphonous acid, sodium phenylphosphonite, potassium phenylphosphonite, lithium phenylphosphonite, ethyl phenylphosphonite, phenylphosphonic acid, ethylphosphonic acid, sodium phenylphosphonate, potassium phenylphosphonate, lithium phenylphosphonate, diethyl phenylphosphonate, sodium ethylphosphonate, potassium ethylphosphonate, phosphorous acid, sodium hydrogenphosphite, sodium phosphite, triethyl phosphite, triphenyl phosphite and pyrophosphorous acid. Among them, in particular, metal hypophosphites such as sodium hypophosphite, potassium hypophosphite and lithium hypophosphite are preferably used because of excellent effects of promoting an amidation reaction and preventing coloring thereof, and sodium hypophosphite is particularly preferred, but the phosphorus atom-containing compound which can be used in the present invention is not limited to these compounds.

The amount of the phosphorus atom-containing compound to be added to the polycondensation system of the polyamide resin (C) is preferably 1 to 500 ppm, more preferably 5 to 450 ppm, and even more preferably 10 to 400 ppm when converted to the phosphorus atom concentration in the polyamide resin (C). By setting the amount of the phosphorus atom-containing compound to be added within the above-described range, it is possible to prevent coloring of polyamide during polycondensation and to suppress gelation of polyamide, and therefore it is possible to maintain good outer appearance of molded products.

Further, it is preferred to add an alkali metal compound in combination with the phosphorus atom-containing compound to the polycondensation system of the polyamide resin (C). In order to prevent coloring of polyamide during polycondensation, it is required to allow a sufficient amount of the phosphorus atom-containing compound to exist, but in this case, gelation of polyamide may be promoted. For this reason, and for adjusting the amidation reaction rate, it is preferred to allow an alkali metal compound or alkaline earth metal compound to coexist. Examples thereof include, but are not limited to, alkali metal/alkaline earth metal hydroxides such as lithium hydroxide, sodium hydroxide, potassium hydroxide, rubidium hydroxide, cesium hydroxide, magnesium hydroxide, calcium hydroxide and barium hydroxide, and alkali metal/alkaline earth metal acetates such as lithium acetate, sodium acetate, potassium acetate, rubidium acetate, cesium acetate, magnesium acetate, calcium acetate and barium acetate.

When adding the alkali metal compound to the polycondensation system of the polyamide resin (C), the value obtained by dividing the mole number of the compound by the mole number of the phosphorus atom-containing compound

is set to preferably 0.5 to 2.0, more preferably 0.6 to 1.8, and even more preferably 0.7 to 1.5. By setting the value within the above-described range, it is possible to obtain the effect of promoting the amidation reaction exerted by the phosphorus atom-containing compound while suppressing the production of gel.

The polyamide resin (C) obtained by melt polycondensation is taken out, pelletized, and then dried to be used. It may be further subjected to solid phase polymerization in order to increase the polymerization degree. As a heating apparatus to be used for drying or solid phase polymerization, a continuous heating and drying apparatus, a rotary drum type heating apparatus such as those called tumble dryer, conical dryer, rotary dryer, etc., and a conical heating apparatus equipped with a rotary wing inside called Nauta mixer can be suitably used. However, the heating apparatus is not limited thereto, and a publicly-known method and apparatus can be used. In the case of solid phase polymerization of a polyamide, among the above-described apparatuses, a batch-type heating apparatus is particularly preferably used because the system can be sealed and it is easier to perform polycondensation in a state in which oxygen that causes coloring is removed.

In the polyamide resin (C) obtained by the above-described process, the degree of coloring is low and the ratio of gel is low. In the present invention, among polyamides obtained by the above-described process, a polyamide having a b* value of 5 or less in the color difference test according to JIS-K-7105 is preferably used. The b* value of the polyamide is more preferably 3 or less, and even more preferably 1 or less. By setting the b* value of the polyamide resin (C) to 5 or less, a molded product obtained by post-processing having excellent whiteness can be obtained, and the commercial value thereof can be held.

There are several indexes of the polymerization degree of the polyamide resin (C), and the relative viscosity is generally used. The relative viscosity of the polyamide resin (C) is preferably 1.5 to 4.2, more preferably 1.6 to 4.0, and even more preferably 1.7 to 3.8. By setting the relative viscosity of the polyamide resin (C) within the above-describe range, the molding processability is stabilized, and it is possible to obtain molded products having good outer appearance. Note that the relative viscosity as used herein refers to a ratio between the drop time (t), which is obtained by dissolving 1 g of polyamide in 100 ml of 96% sulfuric acid and carrying out the measurement at 25°C using a Cannon-Fenske-type viscometer, and the drop time ($t_0$) of 96% sulfuric acid itself measured in the same way, and it is represented by the following formula:

$$\text{Relative viscosity} = t/t_0$$

The terminal amino group concentration of the polyamide resin (C) to be used in the present embodiment is preferably 10 to 40 μ-equivalent/g, more preferably 12 to 35 μ-equivalent/g, and even more preferably 15 to 30 μ-equivalent/g.

By setting the terminal amino group concentration within the above-described range, gelation caused by increase in heat history of the polyamide resin (C) is suppressed, and yellowing of outer appearance caused by a reaction between acetaldehyde generated from the polyester resin (A) and the terminal amino group is also suppressed. Examples of means for setting the terminal amino group concentration within the above-described range include a method in which polymerization is progressed in a manner such that the amount of dicarboxylic acid becomes slightly excessive with respect to the molar ratio between the diamine component and the dicarboxylic acid component, and a method in which the terminal amino group is capped by adding a monocarboxylic acid compound, a dicarboxylic anhydride or the like after the reaction is completed, but the means is not limited to these methods, and various methods can be used.

The content of m-xylylenediamine remaining in the polyamide resin (C) is set to be preferably 10 ppm or less, more preferably 5 ppm or less, and even more preferably 1 ppm. By setting the remaining amount of m-xylylenediamine to 10 ppm or less, yellowing of outer appearance caused by a reaction between acetaldehyde generated from the polyester resin (A) and the terminal amino group is suppressed. Examples of means for setting the content of m-xylylenediamine to 10 ppm or less include a method in which polyamide after polymerization is heated under reduced pressure, and a method in which melting is carried out using an extruder or the like and the pressure in the system is reduced, but the means is not limited to these methods, and various methods can be used.

Further, an oligomer consisting of the dicarboxylic acid component and the diamine component may be mixed in the polyamide resin (C). In particular, a monomer in which m-xylylenediamine and adipic acid are cyclized (cyclic monomer) may rise to the surface of the molding at the time of the melt process, resulting in poor outer appearance of the molding. In the present invention, the amount of the above-described cyclic monomer contained in the polyamide resin (C) is set to be preferably 1 wt% or less, more preferably 0.8 wt% or less, and even more preferably 0.5 wt% or less. By adjusting the content of the cyclic monomer to 1 wt% or less, molded products having good outer appearance can be produced continuously for a long period of time. Examples of means for reducing the content of the cyclic monomer include a method in which the polyamide resin (C) is washed with water, a method in which the treatment is carried out at a high temperature and in a high vacuum environment, and a method in which removal is carried out with the pressure

in an extruder being reduced at the time of melting and extruding, but the means is not limited to these methods, and publicly-known methods for removing a low-molecular weight or volatile component can be suitably employed. Regarding the method for measuring the content of the cyclic monomer in the present invention, polyamide is crushed by means of freezing and crushing, then extraction is carried out at 80°C for 1 hour using methanol as a solvent, and analysis is carried out by means of liquid chromatography.

Additives such as an antioxidant, a delustering agent, a heat-resistance stabilizer, a weathering stabilizer, an ultraviolet absorber, a nucleating agent, a plasticizer, a flame retardant, an antistatic agent, a color protection agent, a lubricant and an antigelling agent, clays such as layered silicate, nanofillers, etc. can also be added to the polyamide resin (C) within a range in which the effects of the present invention are not reduced. Moreover, according to need, various polyamides such as Nylon 6, Nylon 66 and amorphous nylons in which an aromatic dicarboxylic acid is utilized as a monomer and modified resins thereof, polyolefins and modified resins thereof, elastomers having styrene in the skeleton thereof, etc. can be added to the polyamide resin (C) for the purpose of modification of the polyamide resin (C), but such additives are not limited to the above-described substances, and various materials may be mixed together. Furthermore, it is possible to product a multilayer molding having oxygen absorption function by allowing cobalt metal to exist in the multilayer molding of the present invention to induce an oxidation reaction of the polyamide resin (C). Regarding the method for allowing cobalt metal to exist in the multilayer molding, the polyester resin (A) and/or the polyester resin (D), wherein a cobalt compound is used as one of polymerization catalysts, may be utilized. Alternatively, a cobalt compound may be melted and mixed with the polyester resin (A) and/or the polyester resin (D) and/or the polyamide resin (C) in advance for utilization. Alternatively, a cobalt compound may be mixed with the polyester resin (A) and/or the polyester resin (D) and/or the polyamide resin (C) at the time of producing the multilayer molding. As the cobalt compound, cobalt carboxylates such as cobalt octanoate, cobalt naphthenate, cobalt acetate and cobalt stearate are preferably used. Regarding the amount of the cobalt compound to be added, the concentration of cobalt metal relative to the weight of the multilayer molding is preferably 10 to 1000 ppm, more preferably 30 to 600 ppm, and even more preferably 50 to 400 ppm. By setting the concentration within the above-described range, effective oxygen absorption function can be imparted to the multilayer molding. Note that the above-described cobalt compound functions as a catalyst for an oxidation reaction of an organic compound having an unsaturated carbon bond as well as the polyamide resin (C). Therefore, in order to further improve the oxygen absorption function of the multilayer molding, for example, polymers of unsaturated hydrocarbons such as polybutadiene and polyisoprene and oligomers thereof, and compounds to which a functional group is added for improving compatibility can also be added.

The polyester resin (D) to be used in the present embodiment is a polyester, which contains a dicarboxylic acid unit and a diol unit, and which contains a diol unit having a cyclic acetal skeleton as the diol unit. The diol unit having a cyclic acetal skeleton is preferably a unit derived from a compound represented by general formula (1) or (2) below:

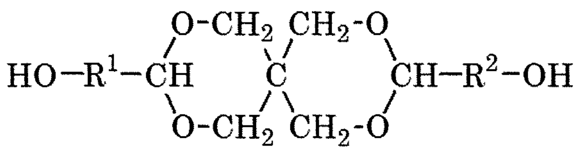

(1)

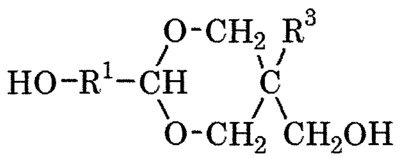

(2)

$R^1$ and $R^2$ each independently represent a divalent hydrocarbon group selected from the group consisting of a $C_{1-10}$ divalent aliphatic hydrocarbon group, a $C_{3-10}$ divalent alicyclic hydrocarbon group and a $C_{6-10}$ divalent aromatic hydrocarbon group. $R^3$ represents a hydrocarbon group selected from the group consisting of a $C_{1-10}$ aliphatic hydrocarbon group, a $C_{3-10}$ alicyclic hydrocarbon group and a $C_{6-10}$ aromatic hydrocarbon group. As the compound represented by general formula (1) or (2), 3,9-bis(1,1-dimethyl-2-hydroxyethyl)-2,4,8,10-tetraoxaspiro[5.5]undecane or 5-methylol-5-ethyl-2-(1,1-dimethyl-2-hydroxyethyl)-1,3-dioxane is particularly preferred.

Further, diol units other than the diol unit having a cyclic acetal skeleton are not particularly limited, and examples thereof include units derived from: aliphatic diols such as ethylene glycol, trimethylene glycol, 1,4-butanediol, 1,5-pentanediol, 1,6-hexanediol, diethylene glycol, propylene glycol and neopentylglycol; polyether diols such as polyethylene glycol, polypropylene glycol and polybutylene glycol; alicyclic diols such as 1,3-cyclohexanedimethanol, 1,4-cyclohexanedimethanol, 1,2-decahydronaphthalenedimethanol, 1,3-decahydronaphthalenedimethanol, 1,4-decahydronaphthalenedimethanol, 1,5-decahydronaphthalenedimethanol, 1,6-decahydronaphthalenedimethanol, 2,7-decahydronaphthalenedimethanol, tetralindimethanol, norbornanedimethanol, tricyclodecanedimethanol and pentacyclododecanedimethanol; bisphenols such as 4,4'-(1-methylethylidene)bisphenol, methylene bisphenol (bisphenol F), 4,4'-cyclohexylidene bisphenol (bisphenol Z) and 4,4'-sulfonylbisphenol (bisphenol S); alkylene oxide adducts of the above-described bisphenols; aromatic dihydroxy compounds such as hydroquinone, resorcin, 4,4'-dihydroxybiphenyl, 4,4'-dihydroxydiphenyl ether and 4,4'-dihydroxydiphenyl benzophenone; and alkylene oxide adducts of the above-described aromatic dihydroxy compounds. From the viewpoint of mechanical performance, economic efficiency, etc. of the polyester resin of the present invention, units derived from ethylene glycol, diethylene glycol, trimethylene glycol, 1,4-butanediol and 1,4-cyclohexanedimethanol are preferred, and units derived from ethylene glycol are particularly preferred. The diol units listed above may be used solely or in combination.

The ratio of the diol unit having a cyclic acetal skeleton in the diol unit in the polyester resin (D) of the present embodiment is 1 to 80 mol%, preferably 2 to 60 mol%, and more preferably 5 to 50 mol%. By setting the ratio of the diol unit having a cyclic acetal skeleton to 1 mol% or more, the problem of delamination can be remedied. Meanwhile, when the ratio exceeds 80 mol%, problems of yellowing and the like are caused by high molding temperatures.

Further, the dicarboxylic acid unit of the polyester resin (D) of the present embodiment is not particularly limited, but examples thereof include units derived from: aliphatic dicarboxylic acids such as succinic acid, glutaric acid, adipic acid, pimelic acid, suberic acid, azelaic acid, sebacic acid, dodecanedicarboxylic acid, cyclohexanedicarboxylic acid, decanedicarboxylic acid, norbornanedicarboxylic acid, tricyclodecanedicarboxylic acid and pentacyclododecanedicarboxylic acid; and aromatic dicarboxylic acids such as terephthalic acid, isophthalic acid, phthalic acid, 2-methylterephthalic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, biphenyldicarboxylic acid and tetralin dicarboxylic acid. From the viewpoint of mechanical performance and heat resistance of the polyester resin of the present invention, units derived from aromatic dicarboxylic acids such as terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid are preferred, and terephthalic acid, 2,6-naphthalenedicarboxylic acid and isophthalic acid are particularly preferred. From the viewpoint of economic efficiency, units derived from terephthalic acid are preferred, and by using 2,6-naphthalenedicarboxylic acid, transparency and gas barrier properties can be improved. The dicarboxylic acids listed above may be used solely or in combination.

Preferably, 1 to 100 mol% of the dicarboxylic acid unit of the polyester resin (D) is a unit derived from a dicarboxylic acid having a benzene skeleton and 0 to 99 mol% of the dicarboxylic acid unit of the polyester resin (D) is a unit derived from a dicarboxylic acid having a naphthalene skeleton. More preferably, 45 to 100 mol% of the dicarboxylic acid unit of the polyester resin (D) is a unit derived from a dicarboxylic acid having a benzene skeleton and 0 to 55 mol% of the dicarboxylic acid unit of the polyester resin (D) is a unit derived from a dicarboxylic acid having a naphthalene skeleton. Even more preferably, 70 to 100 mol% of the dicarboxylic acid unit of the polyester resin (D) is a unit derived from a dicarboxylic acid having a benzene skeleton and 0 to 30 mol% of the dicarboxylic acid unit of the polyester resin (D) is a unit derived from a dicarboxylic acid having a naphthalene skeleton.

Monoalcohol units such as butyl alcohol, hexyl alcohol and octyl alcohol, units derived from polyalcohols (trivalent or higher) such as trimethylolpropane, glycerin and pentaerythritol, units derived from monocarboxylic acids such as benzoic acid, propionic acid and butyric acid, and units derived from polyvalent carboxylic acids (trivalent or higher) such as trimellitic acid, trimesic acid and pyromellitic acid may also be introduced into the polyester resin (D) without departing from the purpose of the present invention.

The method for producing the polyester resin (D) is not particularly limited, and conventionally known methods can be applied thereto. Examples thereof include a melt polymerization method such as a transesterification method and a direct esterification method, a solution polymerization method and a solid phase polymerization method.

The temperature difference between the glass-transition temperature ($Tg_2$) of the polyester resin (D) and the glass-transition temperature ($Tg_1$) of the polyester resin (A) ($|Tg_2-Tg_1|$) is set to be preferably 50°C or less, more preferably 40°C or less, and even more preferably 30°C or less.

When the temperature difference between $Tg_1$ and $Tg_2$ is 50°C or more, problems of poor outer appearance and the like such as thickness unevenness and whitening caused by blow molding may be caused.

The limiting viscosity of the polyester resin (D) is preferably 0.3 to 1.2 (dL/g), more preferably 0.5 to 1.0 (dL/g), and even more preferably 0.6 to 0.8 (dL/g). When the limiting viscosity is less than 0.3, reduction in moldability and strength is caused, and when the limiting viscosity exceeds 1.2, it is difficult to carry out molding.

The mixed resin (B) to be used in the present embodiment can be produced by a dry-blending method in which pellets of the polyamide resin (C) and the polyester resin (D) are subjected to dry blending, or a melt-blending method in which the polyamide resin (C) and the polyester resin (D) are melt-extruded to be re-pelletized. Note that an appropriate formulation is selected depending on intended use, conditions for use, mechanical performance, etc.

The weight ratio between the polyamide resin (C) and the polyester resin (D) in the mixed resin (B) ((C)/(D)) is 99/1 to 10/90, preferably 97/3 to 20/80, more preferably 95/5 to 30/70, even more preferably 92/8 to 50/50, and particularly preferably 88/12 to 70/30. When the weight ratio of the polyester resin (D) is less than 1%, effects of improving peeling resistance cannot be obtained. Further, when the weight ratio of the polyester resin (D) exceeds 90%, effects

of improving peeling resistance can be obtained, but good barrier properties of the polyamide resin (C) are not imparted to the multilayer molding, and therefore it is not practical.

Further, it is possible to use and blend another thermoplastic resin in the mixed resin (B) in addition to the polyamide resin (C) and the polyester resin (D) within a range in which the features of the present invention are not impaired. Examples of such thermoplastic resins include thermoplastic polyester resins such as polyethylene-2,6-naphthalene dicarboxylate, polyolefin-based resins, polycarbonate, polyacrylonitrile, polyvinyl chloride and polystyrene. The blending amount of the other thermoplastic resins is preferably 30 wt% or less, more preferably 20 wt% or less, and even more preferably 10 wt% or less of the total amount of the mixed resin (B).

The mixed resin (B) may contain at least one metal element selected from the group consisting of a transition metal belonging to Group VIII of the periodic table, manganese, copper and zinc. When the metal element is contained, oxidation of the mixed resin (B) is promoted, and oxygen absorption function is exerted.

The metal element is preferably added to the polyamide resin (C) in the form of a low-acid-number inorganic acid salt, organic acid salt or complex salt of the metal element (hereinafter collectively referred to as the "metal catalyst compound"). Examples of the inorganic acid salt include halides such as chlorides and bromides, sulfates, nitrates, phosphates and silicates. Examples of the organic acid salt include carboxylates, sulfonates and phosphonates. Examples of the complex salt include transition metal complexes with β-diketone, β-keto acid ester or the like. Since good oxygen absorption function can be obtained, carboxylates, halides and acetylacetonate complexes of the aforementioned metal element are preferably used, and stearates, acetates and acetylacetonate complexes are more preferably used. As the metal element, cobalt is particularly preferred because of its excellent oxygen absorption function. One or two or more of the above-described metal catalyst compounds can be added.

The amount of the metal element to be added is preferably 0.01 to 0.10 wt%, and more preferably 0.02 to 0.08 wt% relative to the total amount of the polyamide resin (C) and the polyester resin (D). When the adding amount is less than 0.01 wt%, oxygen absorption function is not sufficiently exerted, and the effect of improving oxygen barrier properties of the multilayer molding becomes low. When the adding amount is more than 0.10 wt%, the effect of oxygen barrier properties of the multilayer molding is not further improved, and therefore it is uneconomical.

In the multilayer molding of the present invention, a portion having a low stretching magnification (1 to 2.5-fold) may be generated depending on the shape thereof When a layer made of the mixed resin (B) in the portion having a low stretching magnification absorbs water, whitening may occur. By adding a whitening preventing agent to the mixed resin (B) according to need, whitening is suppressed and a multilayer molding having good transparency can be obtained thereby.

The whitening preventing agent to be used in the present embodiment is a $C_{18-50}$ fatty acid metal salt, and preferably a $C_{18-34}$ fatty acid metal salt. Whitening prevention can be expected when the carbon number is 18 or more. When the carbon number is 50 or less, good homogeneous dispersion in the mixed resin (B) can be obtained. The fatty acid may have a side chain or double bond, but a linear saturated fatty acid such as stearic acid (C18), eicosanoic acid (C20), behenic acid (C22), montanoic acid (C28) and triacontanoic acid (C30) is preferred. The metal which forms a salt with the fatty acid is not particularly limited. Examples thereof include sodium, potassium, lithium, calcium, barium, magnesium, strontium, aluminium and zinc. Particularly preferred are sodium, potassium, lithium, calcium, aluminium and zinc.

Such fatty acid metal salts may be used solely, or two or more of them may be used in combination. In the present invention, the particle size of the fatty acid metal salt is not particularly limited. However, since it becomes easier to obtain homogeneous dispersion in the mixed resin (B) when the particle size is smaller, the particle size is preferably 0.2 mm or less.

The amount of the fatty acid metal salt to be added is preferably 0.005 to 1.0 parts by weight, more preferably 0.05 to 0.5 parts by weight, and particularly preferably 0.12 to 0.5 parts by weight relative to the total amount (100 parts by weight) of the polyamide resin (C) and the polyester resin (D). By adding the fatty acid metal salt in an amount of 0.005 parts by weight or more relative to the total amount (100 parts by weight), the whitening prevention effect can be expected. When the adding amount is 1.0 parts by weight or less relative to the total amount (100 parts by weight), the haze value of a multilayer molding obtained can be kept at a low level.

Instead of the above-described fatty acid metal salt, a compound selected from the below-described diamide compound and the diester compound may be added as the whitening preventing agent. One or two or more types of diamide compounds may be added. Alternatively, one or two or more types of diester compounds may be added. Alternatively, one or two or more types of diamide compounds may be used in combination with one or two or more types of diester compounds.

The diamide compound is obtained from a $C_{8-30}$ fatty acid and a $C_{2-10}$ diamine. When the carbon number of the fatty acid is 8 or more and the carbon number of the diamine is 2 or more, the whitening prevention effect can be expected. When the carbon number of the fatty acid is 30 or less and the carbon number of the diamine is 10 or less, good homogeneous dispersion in the mixed resin (B) can be obtained. The fatty acid may have a side chain or double bond, but is preferably a linear saturated fatty acid.

Examples of the fatty acid component of the diamide compound include stearic acid (C18), eicosanoic acid (C20), behenic acid (C22), montanoic acid (C28) and triacontanoic acid (C30). Examples of the diamine component of the diamide compound include ethylenediamine, butylenediamine, hexanediamine, xylylenediamine and bis(aminomethyl)cyclohexane. The diamide compound obtained by using the above-described components in combination is used in the present invention. A diamide compound which is obtained from a $C_{8-30}$ fatty acid and a diamine mainly composed of ethylenediamine, or a diamide compound which is obtained from a fatty acid mainly composed of montanoic acid and a $C_{2-10}$ diamine is preferred.

The diester compound is obtained from a $C_{8-30}$ fatty acid and a $C_{2-10}$ diol. When the carbon number of the fatty acid is 8 or more and the carbon number of the diol is 2 or more, the whitening prevention effect can be expected. When the carbon number of the fatty acid is 30 or less and the carbon number of the diol is 10 or less, good homogeneous dispersion in the mixed resin (B) can be obtained. The fatty acid may have a side chain or double bond, but is preferably a linear saturated fatty acid.

Examples of the fatty acid component of the diester compound include stearic acid (C18), eicosanoic acid (C20), behenic acid (C22), montanoic acid (C28) and triacontanoic acid (C30). Examples of the diol component of the diester compound include ethylene glycol, propanediol, butanediol, hexanediol, xylylene glycol and cyclohexanedimethanol. The diester compound obtained by using the above-described components in combination is used in the present invention. A diester compound obtained from a fatty acid mainly composed of montanoic acid and a diol mainly composed of ethylene glycol and/or 1,3-butanediol is particularly preferred.

The amount of the diamide compound and/or the diester compound to be added is preferably 0.005 to 1.0 parts by weight, more preferably 0.05 to 0.5 parts by weight, and particularly preferably 0.12 to 0.5 parts by weight relative to the total amount (100 parts by weight) of the polyamide resin (C) and the polyester resin (D). By adding the diamide compound and/or the diester compound in an amount of 0.005 parts by weight or more relative to the total amount (100 parts by weight), the whitening prevention effect can be expected. When the adding amount is 1.0 parts by weight or less relative to the total amount (100 parts by weight), the haze value of a multilayer molding obtained can be kept at a low level.

For adding the whitening preventing agent to the mixed resin (B), a conventionally known mixing method can be employed. For example, pellets of the polyamide resin (C) and the polyester resin (D), the metal catalyst compound and the whitening preventing agent may be put into a rotary hollow vessel to be mixed together. Alternatively, a method in which a polyamide resin composition containing a high-concentration whitening preventing agent is produced, then it is diluted with a polyamide resin pellet not containing the whitening preventing agent at a predetermined concentration and the obtained mixture is melted and kneaded, a method in which melting and kneading is carried out and subsequently molding is carried out, for example, by means of injection molding, or the like can be employed.

When the whitening preventing agent is used, it can prevent whitening of a layer made of the mixed resin (B) immediately after the production of the multilayer molding according to the molding method of the present invention. In addition, it can prevent whitening of the layer made of the mixed resin (B) after long-term preservation of the multilayer molding under conditions where whitening is not caused or the degree of whitening is not increased. Specifically, whitening is suppressed at a level similar to that immediately after molding even if the multilayer molding is subjected to high humidity or brought into contact with water or boiling water or heated to the glass transition temperature or higher after preserved for a long period of time under conditions where whitening is not caused or the degree of whitening is not increased without addition of the whitening preventing agent, for example, in an atmosphere with temperature of 23°C and humidity of 50%RH.

The shape of the multilayer molding of the present embodiment is not particularly limited. Examples thereof include a vessel shape, a sheet shape and a stretched film shape. Examples of vessel-shaped moldings include a hollow vessel, a tray and a container. Examples of the hollow vessel include a hollow vessel made by injection blow molding and a hollow vessel made by direct blow molding.

Hereinafter, the case where the multilayer molding of the present embodiment is a hollow vessel made by injection blow molding will be explained. The multilayer molding made by injection blow molding usually has a structure having 3 or more layers. The multilayer molding is obtained by using an injection molding machine having 2 injection cylinders, wherein: the polyester resin (A) and the mixed resin (B) having gas barrier properties are injected into a mold cavity through a mold hot runner from the respective injection cylinders at the surface layer side and the core side to obtain a multilayer parison; and the multilayer parison is further subjected to biaxial stretch blow molding. Blow molding of the multilayer parison may be carried out according to a conventionally known method. For example, a method in which the surface of the multilayer parison is heated to 80 to 120°C and then blow molding is carried out, or a method in which the mouth portion of the multilayer parison is heated to be crystallized, the surface of the multilayer parison is heated to 80 to 120°C and then blow molding is carried out with a mold at 90 to 150°C can be employed. The blow pressure is usually 0.5 to 4 MPa.

In the process of injecting the polyester resin (A) constituting the outer surface layer and the inner surface layer from the surface layer-side injection cylinder and injecting the mixed resin (B) constituting the core layer from the core

side injection cylinder, firstly the polyester resin (A) is injected, then the mixed resin (B) and the polyester resin (A) are injected simultaneously, and then the polyester resin (A) is injected in a required amount to fill a mold cavity, thereby producing a multilayer parison having a three-layer structure (polyester resin (A)/mixed resin (B)/polyester resin (A)).

In the process of injecting the polyester resin (A) constituting the outer surface layer and the inner surface layer from the surface layer-side injection cylinder and injecting the mixed resin (B) constituting the core layer from the core side injection cylinder, firstly the polyester resin (A) is injected, then the mixed resin (B) alone is injected, and finally the polyester resin (A) is injected to fill a mold cavity, thereby producing a multilayer parison having a five-layer structure (polyester resin (A)/mixed resin (B)/polyester resin (A)/mixed resin (B)/polyester resin (A)). Note that the method for producing a multilayer parison is not limited to the above-described methods.

In the hollow vessel made by injection blow molding of the present embodiment, the thickness of the surface layer containing the polyester resin (A) is preferably 0.01 to 1.0 mm, and the thickness of the core layer composed of the mixed resin (B) is preferably 0.005 to 0.2 mm. Further, the thickness of the hollow vessel is not required to be constant over the whole vessel, and is usually 0.2 to 1.0 mm.

In the hollow vessel made by injection blow molding of the present embodiment, gas barrier performance can be exerted when the core layer composed of the mixed resin (B) exists at least at the barrel portion of the hollow vessel, but better gas barrier performance can be obtained when the core layer is extended to the vicinity of the end of the cap section of the hollow vessel.

In the hollow vessel made by injection blow molding of the present embodiment, the weight of the layer composed of the mixed resin (B) is preferably 1 to 30 wt%, and more preferably 2 to 20 wt% relative to the total weight of the hollow vessel. When the weight of the layer composed of the mixed resin (B) is less than 1 wt%, gas barrier properties of the hollow vessel may be insufficient and therefore it is not preferred. When the weight of the layer composed of the mixed resin (B) is more than 30 wt%, it may be difficult to mold the multilayer parison as a precursor into the hollow vessel, and therefore it is not preferred.

In the hollow vessel made by injection blow molding of the present embodiment, delamination due to drop or impact is not easily caused. Moreover, delamination is not easily caused even if the hollow vessel has a shape including a concavo-convex portion or a bent portion. Therefore, the shape of the hollow vessel is not limited to a shape in which the concavo-convex portion or bent portion is few, and high design flexibility can be obtained. Furthermore, since the hollow vessel of the present invention has excellent aroma retaining properties, it is preferably used for storage and preservation of various articles including: liquid beverages such as carbonated drink, juice, water, milk, sake, whiskey, shochu, coffee, tea, jelly beverage and health beverage; seasonings such as liquid seasoning, sauce, soy sauce, dressing and liquid stock; liquid-type foods such as liquid soup; liquid-type pharmaceutical products; lotion; milky lotion; hairdressing; hair dye; and shampoo.

Hereinafter, the case where the multilayer molding of the present embodiment is a multilayer sheet will be explained. The method for preparing a multilayer sheet is not particularly limited, and a conventionally known multilayering technique such as extrusion molding, coextrusion, laminating and deposition can be used. In the case of extrusion molding, a single screw extruder or a twin screw extruder may be used, and the temperature of the extruder is preferably 200 to 290°C, and more preferably 210 to 280°C.

The multilayer sheet of the present embodiment at least has the core layer composed of the mixed resin (B) and a layer composed of a resin containing 70 wt% or more of the thermoplastic polyester resin (A) in contact therewith. The multilayer sheet may also have a layer composed of a transparent resin (E) consisting of at least one transparent resin selected from the group consisting of a polyester resin other than the polyester resin (A) and the polyester resin (D), an acrylic resin, a polystyrene resin, a polycarbonate resin, a methyl methacrylate-styrene copolymer, an acrylonitrile-butadiene-styrene copolymer, a vinyl chloride resin and an alicyclic polyolefin resin. As the polyester resin other than the polyester resin (A) and the polyester resin (D), polyethylenenaphthalate, isophthalic acid-modified polyethylene terephthalate, 1,4-cyclohexanedimethanol-modified polyethylene terephthalate and polyarylate are preferred.

When the multilayer sheet of the present embodiment is produced by extrusion molding, a multilayer sheet-forming machine having at least one surface layer-side extrusion cylinder and at least one core side extrusion cylinder can be used. A resin containing 70 wt% or more of the thermoplastic polyester resin (A) is extruded from the surface layer-side extrusion cylinder or from at least one of the surface layer-side extrusion cylinder and the core side extrusion cylinder to form the resin layer, and the mixed resin (B) is extruded from the at least one core side extrusion cylinder to form at least one core layer in contact with the resin layer composed of resin containing the polyester resin (A), thereby obtaining the multilayer sheet.

In the thermoplastic polyester resin (A) to be used in the multilayer sheet, edge portions of the multilayer sheet and an end material generated at the time of producing a multilayer sheet vessel obtained by molding the multilayer sheet as described below can be blended (hereinafter, a resin obtained by blending the end material of the multilayer sheet in the polyester resin (A) is referred to as "the polyester resin (A')").

Further, the edge portions of the multilayer sheet and the end material generated at the time of producing the multilayer sheet vessel can also be blended in the transparent resin (E) (hereinafter, a resin obtained by blending the

end material of the multilayer sheet in the transparent resin (E) is referred to as "the transparent resin (E')").

The structure of the multilayer sheet of the present embodiment may be selected according to an intended use of the sheet, and examples thereof include: polyester resin (A)/mixed resin (B)/polyester resin (A) or polyester resin (A')/mixed resin (B)/polyester resin (A') (a three-layer structure consisting of two types of layers); polyester resin (A)/mixed resin (B)/polyester resin (A') or polyester resin (A)/mixed resin (B)/transparent resin (E) or polyester resin (A)/mixed resin (B)/transparent resin (E') or polyester resin (A')/mixed resin (B)/transparent resin (E) or polyester resin (A')/mixed resin (B)/transparent resin (E') (a three-layer structure consisting of three types of layers); polyester resin (A)/mixed resin (B)/polyester resin (A)/mixed resin (B)/polyester resin (A) or polyester resin (A')/mixed resin (B)/polyester resin (A')/mixed resin (B)/polyester resin (A') (a five-layer structure consisting of two types of layers); polyester resin (A)/mixed resin (B)/polyester resin (A)/mixed resin (B)/polyester resin (A') or polyester resin (A)/mixed resin (B)/polyester resin (A')/mixed resin (B)/polyester resin (A) or polyester resin (A)/polyester resin (A')/mixed resin (B)/polyester resin (A')/polyester resin (A) or polyester resin (A')/polyester resin (A)/mixed resin (B)/polyester resin (A')/polyester resin (A) or polyester resin (A)/polyester resin (A')/mixed resin (B)/polyester resin (A)/polyester resin (A') or polyester resin (A)/polyester resin (A')/polyester resin (A)/mixed resin (B)/polyester resin (A) or polyester resin (A)/polyester resin (A')/polyester resin (A)/mixed resin (B)/polyester resin (A') or polyester resin (A)/mixed resin (B)/polyester resin (A)/mixed resin (B)/transparent resin (E) or polyester resin (A)/mixed resin (B)/polyester resin (A)/mixed resin (B)/transparent resin (E') or polyester resin (A)/mixed resin (B)/transparent resin (E)/mixed resin (B)/polyester resin (A) or polyester resin (A)/mixed resin (B)/transparent resin (E')/mixed resin (B)/polyester resin (A) (a five-layer structure consisting of three types of layers); and polyester resin (A)/polyester resin (A')/mixed resin (B)/polyester resin (A')/transparent resin (E) or polyester resin (A)/polyester resin (A')/mixed resin (B)/polyester resin (A')/transparent resin (E') or polyester resin (A)/polyester resin (A')/mixed resin (B)/transparent resin (E)/polyester resin (A) or polyester resin (A)/polyester resin (A')/mixed resin (B)/transparent resin (E')/polyester resin (A) or polyester resin (A)/polyester resin (A')/mixed resin (B)/transparent resin (E)/polyester resin (A') or polyester resin (A)/polyester resin (A')/mixed resin (B)/transparent resin (E')/polyester resin (A') or polyester resin (A)/polyester resin (A')/polyester resin (A)/mixed resin (B)/transparent resin (E) or polyester resin (A)/polyester resin (A')/polyester resin (A)/mixed resin (B)/transparent resin (E') or polyester resin (A')/polyester resin (A)/polyester resin (A')/mixed resin (B)/transparent resin (E) or polyester resin (A')/polyester resin (A)/polyester resin (A')/mixed resin (B)/transparent resin (E') or polyester resin (A)/polyester resin (A')/transparent resin (E)/mixed resin (B)/polyester resin (A) or polyester resin (A)/polyester resin (A')/transparent resin (E)/mixed resin (B)/polyester resin (A') or polyester resin (A')/polyester resin (A)/transparent resin (E)/mixed resin (B)/polyester resin (A) or polyester resin (A')/polyester resin (A)/transparent resin (E')/mixed resin (B)/polyester resin (A') or polyester resin (A)/polyester resin (A')/transparent resin (E')/mixed resin (B)/polyester resin (A) or polyester resin (A)/polyester resin (A')/transparent resin (E')/mixed resin (B)/polyester resin (A') or polyester resin (A')/polyester resin (A)/transparent resin (E')/mixed resin (B)/polyester resin (A) or polyester resin (A')/polyester resin (A)/transparent resin (E')/mixed resin (B)/polyester resin (A') (a five-layer structure consisting of four types of layers).

Particularly preferred structures of the multilayer sheet of the present embodiment are: polyester resin (A)/mixed resin (B)/polyester resin (A) (a three-layer structure consisting of two types of layers); polyester resin (A)/mixed resin (B)/polyester resin (A') (a three-layer structure consisting of three types of layers); polyester resin (A)/mixed resin (B)/polyester resin (A)/mixed resin (B)/polyester resin (A) (a five-layer structure consisting of two types of layers); and polyester resin (A)/polyester resin (A')/mixed resin (B)/polyester resin (A')/polyester resin (A) or polyester resin (A)/mixed resin (B)/polyester resin (A')/mixed resin (B)/polyester resin (A) (a five-layer structure consisting of three types of layers).

When the multilayer sheet is a sheet of polyester resin (A)/mixed resin (B)/polyester resin (A) (a three-layer structure consisting of two types of layers), it can be produced, for example, by extruding a resin containing 70 wt% or more of the thermoplastic polyester resin (A) from a surface layer-side extrusion cylinder and extruding the mixed resin (B) from a core layer-side extrusion cylinder.

When the multilayer sheet is a sheet of polyester resin (A)/mixed resin (B)/polyester resin (A') (a three-layer structure consisting of three types of layers), it can be produced, for example, by using a multilayer sheet-forming machine having 2 surface layer-side extrusion cylinders and a core layer-side extrusion cylinder, wherein: a resin containing 70 wt% or more of the thermoplastic polyester resin (A) is extruded from one surface layer-side extrusion cylinder; the thermoplastic polyester (A') is extruded from the other surface layer-side extrusion cylinder; and the mixed resin (B) is extruded from the core layer-side extrusion cylinder.

When the multilayer sheet is a sheet of polyester resin (A)/mixed resin (B)/polyester resin (A)/mixed resin (B)/polyester resin (A) (a five-layer structure consisting of two types of layers), it can be produced, for example, by using a multilayer sheet-forming machine having a surface layer-side extrusion cylinder, an interlayer-side extrusion cylinder and a central layer extrusion cylinder, wherein: a resin containing 70 wt% or more of the thermoplastic polyester resin (A) is extruded from the surface layer-side extrusion cylinder and the central layer extrusion cylinder; and the mixed resin (B) is extruded from the interlayer-side extrusion cylinder.

When the multilayer sheet is a sheet of polyester resin (A)/polyester resin (A')/mixed resin (B)/polyester resin (A')/polyester resin (A) (a five-layer structure consisting of three types of layers), it can be produced, for example, by

using a multilayer sheet-forming machine having a surface layer-side extrusion cylinder, an interlayer-side extrusion cylinder and a central layer extrusion cylinder, wherein: a resin containing 70 wt% or more of the thermoplastic polyester resin (A) is extruded from the surface layer-side extrusion cylinder; the thermoplastic polyester resin (A') is extruded from the interlayer-side extrusion cylinder; and the mixed resin (B) is extruded from the central layer extrusion cylinder.

When the multilayer sheet is a sheet of polyester resin (A)/mixed resin (B)/polyester resin (A')/mixed resin (B)/polyester resin (A) (a five-layer structure consisting of three types of layers), it can be produced, for example, by using a multilayer sheet-forming machine having a surface layer-side extrusion cylinder, an interlayer-side extrusion cylinder and a central layer extrusion cylinder, wherein: a resin containing 70 wt% or more of the thermoplastic polyester resin (A) is extruded from the surface layer-side extrusion cylinder; the mixed resin (B) is extruded from the interlayer-side extrusion cylinder; and the thermoplastic polyester resin (A') is extruded from the central layer extrusion cylinder.

The thickness of each layer of the multilayer sheet of the present embodiment may be suitably selected according to an intended use of the sheet, but the thickness of the layer made of the mixed resin (B) is preferably 1 to 150 μm, more preferably 10 to 100 μm, and even more preferably 20 to 80 μm. The thickness of the surface layer containing the polyester resin (A) is preferably 50 to 1000 μm, more preferably 100 to 800 μm, and even more preferably 200 to 600 μm. The thickness of the entire multilayer sheet is preferably 100 to 2000 μm, more preferably 200 to 1600 μm, and even more preferably 400 to 1200 μm.

The weight of the layer made of the mixed resin (B) in the multilayer sheet of the present embodiment is preferably 1 o 30 wt%, and more preferably 2 to 20 wt% relative to the total weight of the multilayer sheet. When the weight of the layer made of the mixed resin (B) is less than 1 wt%, gas barrier properties of the multilayer sheet may be insufficient, and therefore it is not preferred. When the weight of the layer made of the mixed resin (B) is more than 30 wt%, it may be difficult to form a vessel or the like using the multilayer sheet, and therefore it is not preferred.

Hereinafter, the case where the multilayer molding of the present embodiment has a tray- or container-shape will be explained. The method for producing a tray- or container-shaped multilayer molding is not particularly limited. In a preferred production method thereof, using a pressure forming machine, vacuum forming machine, vacuum pressure forming machine or the like, the surface of the multilayer sheet is rapidly heated to 90 to 250°C to be softened, and then it is molded using a mold having a desired shape, thereby obtaining a vessel (multilayer sheet vessel).

When the surface temperature of the sheet is lower than 90°C, the sheet is not sufficiently softened, and it is difficult to carry out molding. When the surface temperature is higher than 250°C, drawdown is significantly increased, and it is impossible to carry out molding.

The thickness of the multilayer sheet vessel of the present embodiment is preferably 5 to 2000 μm, more preferably 20 to 1800 μm, and even more preferably 30 to 1500 μm.

The haze value of the multilayer sheet vessel of the present embodiment is preferably 15% or less.

The weight of the layer made of the mixed resin (B) in the multilayer sheet vessel of the present embodiment is preferably 1 to 30 wt%, and more preferably 2 to 20 wt% relative to the total weight of the multilayer sheet vessel. When the weight of the layer made of the mixed resin (B) is less than 1 wt%, gas barrier properties of the multilayer sheet vessel may be insufficient, and therefore it is not preferred. When the weight of the layer made of the mixed resin (B) is more than 30 wt%, it may be difficult to mold the multilayer sheet as a precursor into the multilayer sheet vessel, and therefore it is not preferred.

In the multilayer sheet vessel of the present embodiment, materials recovered from polyethylene terephthalate products, materials recovered from modified polyethylene terephthalate products containing a small amount of an isophthalic acid component unit, materials recovered from polyamide products, and/or end materials at the time of the production of molded products, and materials recovered from polyester and/or polyamide resins of non-standard products, etc. may be added to a layer containing the polyester resin (A) within a range in which the effects of the present invention are not reduced.

The content to be put into the multilayer sheet vessel of the present embodiment is not particularly limited, and examples thereof include foods, cosmetics, pharmaceutical products, toiletries, mechanical/electrical/electronic parts, oils and resins. In consideration of safety and hygiene, transparency, printability, impact resistance, aroma retaining properties, etc. possessed by the multilayer sheet vessel of the present embodiment, the multilayer molding of the present embodiment can be suitably used, in particular, as a vessel for preserving foods.

In the multilayer sheet vessel of the present embodiment, delamination due to drop or impact is not easily caused. In addition, since delamination is not easily caused even in the case of employing a shape including a concavo-convex portion and a bent portion, the shape of the multilayer molding is not limited to a shape in which the concavo-convex portion or bent portion is few, and therefore higher design flexibility can be obtained. The multilayer molding of the present invention is preferable for storage and preservation of various articles including: gel-type foods such as tofu (soybean curd), egg-tofu, jelly, pudding, mizu-youkan (soft sweet jellied bean paste), mousse, yogurt and Chinese-style almond jelly; jam, miso (soybean paste), seasoning for Japanese-style pickles, spices such as grated spices; processed meat products such as salami, ham, sausage, yakitori (grilled chicken pieces), meatball, hamburger, roasted pork and beef jerky; processed seafood products such as kamaboko (boiled fish paste), boiled shellfish, boiled fish and chikuwa

(tube-shaped fish paste cake); processed rice products such as watery cooked rice, cooked rice, boiled rice mixed with fish (meat) and vegetables and glutinous rice steamed with red adzuki beans; processed milk products such as cheese, butter, cream and condensed milk; processed egg products such as boiled egg and soft boiled egg; side dishes such as boiled vegetables, boiled beans, fried foods, steamed foods, sautéd foods, boiled foods and grilled foods; Japanese-style pickles; noodles/pastas such as udon (wheat noodle), soba (buckwheat noodle) and spaghetti; and fruits preserved in syrup.

EXAMPLES

Hereinafter, the present invention will be described in more detail based on working examples, but the present invention is not limited thereto.

[Evaluation methods]

Hereinafter, methods for measuring the characteristics measured in the Examples and Comparative Examples below will be described.

(1) Limiting viscosity of polyethylene terephthalate

The limiting viscosity was measured using Relative Viscometer Y501 manufactured by Viscotek. The measurement temperature was 25°C, and a mixed solvent of phenol/tetrachloroethane = 6/4 (weight ratio) was used. A sample/mixed solution was prepared at a concentration of 0.2, 0.4 or 0.6 g/dl, dissolution was carried out at 90°C for 40 minutes, linearization was carried out by plotting the ratio between the specific viscosity ($\eta_{sp}$) and the concentration (C) ($\eta_{sp}$/C) by the concentration (C), and the value of the section of the extrapolated straight line was regarded as the IV value.

$$\text{Intrinsic viscosity } [\eta] = \lim_{C\to 0} (\eta_{sp}/C)$$

(2) Relative viscosity of polyamide MXD6 [$\eta_{rel}$]

1 g of a polyamide resin was weighed precisely, and it was dissolved in 100 ml of 96% sulfuric acid at 20 to 30°C with stirring. After the dissolution was completed, 5 cc of the solution was rapidly taken by a Cannon-Fenske viscometer, and it was cooled in a constant temperature bath at 25°C for 10 minutes, and then the drop velocity (t) was measured. In addition, the drop velocity (t0) of 96% sulfuric acid itself was measured in the same way. Based on t and t0, the relative viscosity was calculated according to the formula (a) below:

$$\text{Relative viscosity} = t/t0 \quad (a)$$

(3) Resin composition

The composition of each of the structural units was calculated by means of the $^1$H-NMR measurement. The measurement was carried out at 500 MHz using BRUKER AVANCE-500III manufactured by BRUKER. Regarding solvents, trifluoroacetic acid-d was used for evaluating the polyester resin (A) and the polyamide resin (C), and deuterochloroform was used for evaluating the polyester resin (D).

(4) Glass transition temperature

The measurement was carried out using a heat flux differential scanning calorimeter (model: DSC-50) manufactured by Shimadzu Corporation. The temperature raising rate was set at 20°C/min.

(5) Melt viscosity

The measurement was carried out using Capirograph 1C manufactured by Toyo Seiki Co., Ltd. (temperature: 260°C, preheating time: 1 min, nozzle diameter: 1 mm, nozzle length: 10 mm, shear rate: 100 (1/sec)).

(6) Thickness of hollow vessel

A hollow vessel was cut to cause delamination, and then the thickness at a position 75 mm away from the bottom of the hollow vessel was measured using a micrometer. Note that the measurement was carried out at 3 points in the circumferential direction (0°, 120°, 240°), and the thickness was calculated based on the arithmetical mean of the measurement values. (7) Thickness of multilayer sheet

Delamination of the multilayer sheet was caused, and then the thickness of each of the surface layer and the core layer was measured using a micrometer. The thickness of the surface layer was calculated based on the average of the surface layers at both the sides. Note that the measurement was carried out at 3 points in each layer, and the thickness was calculated based on the arithmetical mean of the measurement values.

(8) Thickness of multilayer sheet vessel

The multilayer sheet vessel was cut, and using a micrometer, the bottom of the vessel and the overall thickness of the bottom of the vessel were measured. After delamination was caused, the thickness of the core layer was measured.

(9) Total light transmittance, haze value, YI

The measurement was carried out according to JIS-K-7105, ASTM D1003 using a haze meter (model: COH-300A) manufactured by Nippon Denshoku Industries Co., Ltd. (10) Delamination properties of hollow vessel (evaluation of delamination by impact test of the side of the vessel)

Test method: the multilayer molding was filled with water, the cap of the molding was tightened, and it was allowed to stand for 24 hours. The side of the multilayer molding was impacted by a pendulum-type hammer having a projection having a width of 20 mm and Rlmm (weight: 1 kg, distance between the rotation axis and the center of gravity: 27 cm) being swung down with a lifting angle of 90°, and the presence or absence of delamination was judged by visual observation, and the number of times of impact given until delamination was caused was measured. (11) Interlayer strength of multilayer sheet

The multilayer molding was cut to a piece having a width of 15 mm, and using Strograph manufactured by Toyo Seiki Co., Ltd., T-peel test was carried out at a rate of 50 mm/min. The maximum point load at the time of delamination was measured, this was regarded as the T-peel load, and the interlayer strength was evaluated. Note that the number of times of the measurement was 10 in each case, and based on the arithmetical mean of the measurement values, the interlayer strength was calculated.

(12) Delamination properties of multilayer sheet vessel (evaluation of delamination by drop test)

The vessel was filled with 50 ml of water, and then it was heat-sealed with a film made of polyethylene terephthalate. After that, it was allowed to stand in an environment of 23°C and 50%RH for 24 hours. After that, it was horizontally dropped from a height of 200 cm onto a concrete surface, and the presence or absence of delamination was judged by visual observation, and the number of times of drop given until delamination was caused was measured.

(13) Oxygen transmission rate and oxygen transmission coefficient of multilayer molding

The measurement was carried out according to ASTM D3985 under the following atmosphere: temperature: 23°C, relative humidity of the inside of the multilayer molding: 100%, relative humidity of the outside: 50%. OX-TRAN 10/50A manufactured by Modern Controls Incorporated was used for the measurement.

[Synthesis of polyesters (D1) and (D2)]

In a 150-L polyester resin production apparatus equipped with a packed column type rectifier, a partial condenser, a total condenser, a cold trap, a stirrer, a heating device and a nitrogen induction tube, terephthalic acid and ethylene glycol were fed in the amounts described in Table 1, and an esterification reaction was performed according to the ordinary method. To the obtained ester, ethylene glycol for depolymerization and germanium dioxide were added in the amounts described in Table 1, and it was subjected to depolymerization at 225°C under a nitrogen gas stream. The reaction was performed for 3 hours while water produced being distilled away. After that, ethylene glycol was distilled away at 215°C and 13.3 kPa. To the obtained ester, tetra-n-butyl titanate, potassium acetate, triethyl phosphate and 3,9-bis(1,1-dimethyl-2-hydroxyethyl)-2,4,8,10-tetraoxaspiro[5.5]undecane (SPG) were added in the amounts described in Table 1, and a reaction was performed at 225°C and 13.3 kPa for 3 hours. The obtained ester was heated, the pressure was reduced, and finally, a polycondensation reaction was performed at 270°C in a high vacuum environment (300 Pa

or less). When a predetermined melt viscosity was obtained, the reaction was terminated, thereby obtaining polyester resins (D1) and (D2). Evaluation results of the obtained polyester resins (D1) and (D2) are shown in Table 1.

[Synthesis of polyester resins (D3), (D4) and (D5)]

In a 150-L polyester production apparatus equipped with a packed column type rectifier, a partial condenser, a total condenser, a cold trap, a stirrer, a heating apparatus and a nitrogen induction tube, raw material monomers (specifically, methyl 2,6-naphthalenedicarboxylate, dimethyl terephthalate, ethylene glycol and 3,9-bis(1,1-dimethyl-2-hydroxyethyl)-2,4,8,10-tetraoxaspiro[5.5]undecane (SPG)) were fed in the amounts described in Table 2, and it was heated to 215°C in a nitrogen atmosphere in the presence of 0.03 mol of manganese acetate tetrahydrate relative to 100 mol of the dicarboxylic acid component to perform a transesterification reaction. After the distillation amount of methanol reached 80% or more of the theoretical amount, antimony oxide (III), a solution of antimony trioxide/ethylene glycol and triethyl phosphate were added in the amounts described in Table 2. The temperature was gradually elevated and the pressure was gradually reduced, and finally, a polymerization was performed at 280°C and 100Pa or less. When an adequate melt viscosity was obtained, the reaction was terminated, thereby obtaining polyester resins (D3), (D4) and (D5). Evaluation results of the obtained polyester resins (D3), (D4) and (D5) are shown in Table 2.

[Other resins]

In Examples 1-9 and Comparative Examples 1-4, as resins other than the polyester resin (D), the resins described below were used. The composition and physical properties of each of the resins are shown in Table 3.

- Polyester resin (A): polyethylene terephthalate (manufactured by Nippon Unipet Co., Ltd., BK2180)
- Polyamide resin (C): polyamide MXD6 (manufactured by Mitsubishi Gas Chemical Company, Inc., MX Nylon S6011)

[Method for producing hollow vessel]

Hollow vessels used in Examples 1-5 and Comparative Examples 1 and 2 were produced according to the method described below.
Shape of three-layer parison: total length: 95 mm, outer diameter: 22 mm, thickness: 4.2 mm. Note that an injection molding machine (model: SE-130DU-CI, with 2 cavities) manufactured by Sumitomo Heavy Industries, Ltd. was used for the production of the three-layer parison.

Molding conditions of three-layer parison

Temperature of the surface layer-side injection cylinder: 285°C
Temperature of the core layer-side injection cylinder: 275°C
Temperature of the resin flow channel in the mold: 285°C
Temperature of the mold cooling water: 20°C
Ratio of the mixed resin (B) in the parison: 5 wt%

Shape of hollow vessel: total length: 223 mm, outer diameter: 65 mm, internal volume: 500 ml, shape of the bottom: petaloid type, standard thickness of polyester resin (A) layer/mixed resin (B) layer/polyester resin (A) layer: 0.18 mm/0.038 mm/0.21 mm. Note that a blow molding machine (manufactured by Frontier Inc., model: EFB1000ET) was used for biaxial stretch blow molding.
Conditions of biaxial stretch blow molding

Temperature of preform heating: 105°C
Pressure for stretching rod: 0.7 MPa
Primary blow pressure: 1 MPa
Secondary blow pressure: 2.6 MPa
Primary blow delay time: 0.3 sec
Primary blow time: 0.3 sec
Secondary blow time: 2 sec
Blow exhaust time: 0.6 sec
Mold temperature: 30°C

<Example 1>

A hollow vessel having a three-layer structure was molded using materials descried below:
Outer surface layer and inner surface layer

Polyester resin (A)

Core layer

Mixed resin (B): a resin obtained by dry-blending the polyamide resin (C) and the polyester resin (D1) with (C)/(D1) = 80/20 (weight ratio)
The evaluation results are shown in Table 4.

<Example 2>

A hollow vessel having a three-layer structure was molded in a manner similar to that in Example 1, except that as the mixed resin (B), a resin obtained by mixing the polyamide resin (C) and the polyester resin (D2) with (C)/(D2) = 80/20 (weight ratio) was used. The evaluation results of the obtained three-layer vessel are shown in Table 4.

<Example 3>

A hollow vessel having a three-layer structure was molded in a manner similar to that in Example 1, except that as the mixed resin (B), a resin obtained by mixing the polyamide resin (C) and the polyester resin (D3) with (C)/(D3) = 80/20 (weight ratio) was used. The evaluation results of the obtained three-layer vessel are shown in Table 4.

<Example 4>

A hollow vessel having a three-layer structure was molded in a manner similar to that in Example 1, except that as the mixed resin (B), a resin obtained by mixing the polyamide resin (C) and the polyester resin (D4) with (C)/(D4) = 80/20 (weight ratio) was used. The evaluation results of the obtained three-layer vessel are shown in Table 5.

<Example 5>

A hollow vessel having a three-layer structure was molded in a manner similar to that in Example 1, except that as the mixed resin (B), a resin obtained by mixing the polyamide resin (C) and the polyester resin (D5) with (C)/(D5) = 80/20 (weight ratio) was used. The evaluation results of the obtained three-layer vessel are shown in Table 5.

<Comparative Example 1>

A hollow vessel having a three-layer structure was molded in a manner similar to that in Example 1, except that as a resin constituting the core layer, a resin obtained by mixing the polyamide resin (C) and the polyester resin (A) with (C)/(A) = 80/20 (weight ratio) was used. The evaluation results of the obtained three-layer vessel are shown in Table 5.

<Comparative Example 2>

A hollow vessel having a three-layer structure was molded in a manner similar to that in Example 1, except that as a resin constituting the core layer, the polyamide resin (C) was used. The evaluation results of the obtained three-layer vessel are shown in Table 5.

[Preparation and evaluation of multilayer sheet and multilayer sheet vessel]

<Example 6>

Using a multilayer sheet production apparatus equipped with three extruders, a feed block, a T-die, a cooling roll, a wind-up machine and the like, as the mixed resin (B), a resin obtained by mixing the polyamide resin (C) and the polyester resin (D2) with (C)/(D2) = 80/20 (weight ratio) was extruded from the first extruder at 260°C, and as a skin layer, the polyester resin (A) was extruded from the second and third extruders respectively at 270°C to produce a multilayer sheet having a three-layer structure consisting of two types of layers in which the layer structure thereof is

surface layer (polyester resin (A), 270 μm)/gas barrier layer (mixed resin (B), 60 μm)/surface layer (polyester resin (A), 270 μm) via the feed block.

Next, using a vacuum pressure molding machine equipped with a plug assist manufactured by Asano Laboratories Co., Ltd., thermoforming was carried out when the temperature of the sheet surface reached 120°C, thereby obtaining a cup-shaped vessel having an opening of 70 x 70 mm, a depth of 26 mm and a capacity of 100 ml. The evaluation results of the obtained multilayer sheet are shown in Table 6, and the evaluation results of the cup-shaped multilayer sheet vessel are shown in Table 7.

<Example 7>

A multilayer sheet having a three-layer structure was molded in a manner similar to that in Example 6, except that as the mixed resin (B), a resin obtained by mixing the polyamide resin (C) and the polyester resin (D2) with (C)/(D2) = 60/40 (weight ratio) was used, and a cup-shaped multilayer sheet vessel was molded. The evaluation results of the obtained multilayer sheet are shown in Table 6, and the evaluation results of the multilayer sheet vessel are shown in Table 7.

<Example 8>

A multilayer sheet having a three-layer structure was molded in a manner similar to that in Example 6, except that as the mixed resin (B), a resin obtained by mixing the polyamide resin (C) and the polyester resin (D2) with (C)/(D2) = 90/10 (weight ratio) was used, and a cup-shaped multilayer sheet vessel was molded. The evaluation results of the obtained multilayer sheet are shown in Table 6, and the evaluation results of the multilayer sheet vessel are shown in Table 7.

<Example 9>

A multilayer sheet having a three-layer structure was molded in a manner similar to that in Example 6, except that as the mixed resin (B), a resin obtained by mixing the polyamide resin (C) and the polyester resin (D2) with (C)/(D2) = 85/15 (weight ratio) was used, and a cup-shaped multilayer sheet vessel was molded. The evaluation results of the obtained multilayer sheet are shown in Table 6, and the evaluation results of the multilayer sheet vessel are shown in Table 7.

<Comparative Example 3>

A multilayer sheet having a three-layer structure was molded in a manner similar to that in Example 6, except that as the mixed resin (B), a resin obtained by mixing the polyamide resin (C) and the polyester resin (A) with (C)/(A) = 80/20 (weight ratio) was used, and a cup-shaped multilayer sheet vessel was molded. The evaluation results of the obtained multilayer sheet are shown in Table 6, and the evaluation results of the multilayer sheet vessel are shown in Table 7.

<Comparative Example 4>

A multilayer sheet having a three-layer structure was molded in a manner similar to that in Example 6, except that as a resin constituting the core layer, the polyamide resin (C) was used, and a cup-shaped multilayer sheet vessel was molded. The evaluation results of the obtained multilayer sheet are shown in Table 6, and the evaluation results of the multilayer sheet vessel are shown in Table 7.

Table 1

| Polyester resin | | D1 | D2 |
|---|---|---|---|
| Components blended at the time of polymerization | | | |
| PTA | g | 45871 | 48022 |
| SPG | g | 9245 | 6159 |
| EG | g | 19365 | 20273 |
| EG for depolymerization | g | 18337 | 19197 |
| $GeO_2$ | g | 7.2 | 7.5 |
| TBT | g | 4.7 | 4.9 |

(continued)

| Polyester resin | | D1 | D2 |
|---|---|---|---|
| Components blended at the time of polymerization | | | |
| AcOK | g | 5.4 | 5.7 |
| TEP | g | 25.1 | 26.3 |
| Evaluation results of polyester | | | |
| SPG | mol% | 6 | 10 |
| Glass transition temperature | °C | 85 | 87 |
| Limiting viscosity | dl/g | 0.69 | 0.68 |
| Melt viscosity | Pa·s | 470 | 450 |

Meanings of the abbreviations in Table 1 are as described below.

- PTA: terephthalic acid
- EG: ethylene glycol
- SPG: 3,9-bis(1,1-dimethyl-2-hydroxyethyl)-2,4,8,10-tetraoxaspiro[5.5]undecane
- $GeO_2$: germanium dioxide
- TBT: tetra-n-butyl titanate
- AcOK: potassium acetate
- TEP: triethyl phosphate

Table 2

| Polyester resin | | D3 | D4 | D5 |
|---|---|---|---|---|
| Components blended at the time of polymerization | | | | |
| NDCM | g | 15202 | 14475 | 25282 |
| DMT | g | 36259 | 34525 | 20100 |
| SPG | g | 11359 | 14421 | 18890 |
| EG | g | 25497 | 23542 | 19274 |
| $MnAc_2$ | g | 18.3 | 17.4 | 15.2 |
| $Sb_2O_3$ | g | 7.3 | 3.5 | 6.0 |
| $Sb_2O_3$/EG | g | 363 | 173 | 302 |
| TEP | g | 22.7 | 21.6 | 18.9 |
| Evaluation results of polyester | | | | |
| SPG | mol% | 15 | 20 | 30 |
| NDCM | mol% | 25 | 25 | 50 |
| Glass transition temperature | °C | 102 | 106 | 117 |
| Limiting viscosity | dl/g | 0.67 | 0.66 | 0.61 |
| Melt viscosity | Pa·s | 640 | 650 | 700 |

Meanings of the abbreviations in Table 2 are as described below.

- NDCM: methyl 2,6-naphthalenedicarboxylate
- DMT: dimethyl terephthalate
- $MnAc_2$: manganese acetate tetrahydrate
- $Sb_2O_3$: antimony trioxide
- $Sb_2O_3$/EG: solution of antimony trioxide/ethylene glycol

Table 3

| | Polyester resin (A) | Polyamide resin (C) |
|---|---|---|
| Composition<br>Dicarboxylic acid | PTA 98 mol% | Adipic acid 100 mol% |
| Diol | IPA 2 mol%<br>EG 97 mol% | |
| Diamine | DEG 3 mol% | MXDA 100 mol% |
| Physical properties<br>Limiting viscosity<br>Relative viscosity<br>Glass transition temperature | <br>0.83<br><br>79°C | <br><br>2.70<br>90°C |

Meanings of the abbreviations in Table 3 are as described below.

- PTA: terephthalic acid
- IPA: isophthalic acid
- EG: ethylene glycol
- DEG: diethylene glycol
- MXDA: m-xylylenediamine

Table 4

| | | Example 1 | Example 2 | Example 3 |
|---|---|---|---|---|
| Core layer | | | | |
| Polyamide resin (C) | wt% | 80 | 80 | 80 |
| Polyester resin (D1) | wt% | 20 | - | - |
| Polyester resin (D2) | wt% | - | 20 | - |
| Polyester resin (D3) | wt% | - | - | 20 |
| Hollow vessel | | | | |
| Thickness of outer surface layer | μm | 154 | 163 | 177 |
| Thickness of core layer | μm | 31 | 35 | 33 |
| Thickness of inner surface layer | μm | 182 | 137 | 144 |
| Total light transmittance | % | 88 | 87 | 87 |
| Haze value | % | 0.7 | 0.6 | 1.2 |
| YI | | 1.9 | 2.2 | 2.3 |
| Number of times of impact given until delamination was caused | Number of times | 150 | 210 | 140 |
| Oxygen transmission rate | cc/0.21 atm·day·package | 0.012 | 0.013 | 0.011 |
| Oxygen transmission coefficient | cc·mm/$m^2$·day·atm | 0.57 | 0.56 | 0.50 |

Table 5

| | | Example 4 | Example 5 | Comparative Example 1 | Comparative Example 2 |
|---|---|---|---|---|---|
| Core layer | | | | | |
| Polyamide resin (C) | wt% | 80 | 80 | 80 | 100 |
| Polyester resin (D4) | wt% | 20 | - | - | - |
| Polyester resin (D5) | wt% | - | 20 | - | - |

(continued)

| | | Example 4 | Example 5 | Comparative Example 1 | Comparative Example 2 |
|---|---|---|---|---|---|
| Core layer<br>Polyester resin (A) | | - | - | 20 | - |
| Hollow vessel | | | | | |
| Thickness of outer surface layer | μm | 164 | 172 | 143 | 171 |
| Thickness of core layer | μm | 20 | 29 | 27 | 30 |
| Thickness of inner surface layer | μm | 144 | 155 | 125 | 152 |
| Total light transmittance | % | 88 | 87 | 85 | 89 |
| Haze value | % | 1.1 | 4.2 | 4 | 0.4 |
| YI | | 1.8 | 1.9 | 4.1 | 1.5 |
| Number of times of impact given until delamination was caused | Number of times | 130 | 150 | 90 | 80 |
| Oxygen transmission rate | cc/0.21 atm·day·package | 0.011 | 0.012 | 0.011 | 0.007 |
| Oxygen transmission coefficient | cc·mm/$m^2$·day·atm | 0.50 | 0.55 | 0.42 | 0.32 |

Table 6

| | | Example 6 | Example 7 | Example 8 | Example 9 | Comparative Example 3 | Comparative Example 4 |
|---|---|---|---|---|---|---|---|
| Core layer | | | | | | | |
| Polyamide resin (C) | wt% | 80 | 60 | 90 | 85 | 80 | 100 |
| Polyester resin (D2) | wt% | 20 | 40 | 10 | 15 | - | - |
| Polyester resin (A) | wt% | - | - | - | - | 20 | - |
| Multilayer sheet | | | | | | | |
| Thickness of surface layer | μm | 273 | 259 | 271 | 261 | 281 | 275 |
| Thickness of core layer | μm | 70 | 59 | 74 | 72 | 68 | 73 |
| Haze value | % | 34 | 40 | 20 | 19 | 5.8 | 1.7 |
| YI | | 0.8 | 0.9 | 0.9 | 0.3 | 1.5 | 1.2 |
| Interlayer strength | N | 0.47 | 0.40 | 0.38 | 0.38 | 0.36 | 0.25 |
| Oxygen transmission coefficient | cc·mm/$m^2$·day·atm | 0.94 | 1.47 | 0.62 | 0.57 | 0.63 | 0.51 |

Table 7

| | | Example 6 | Example 7 | Example 8 | Example 9 | Comparative Example 3 | Comparative Example 4 |
|---|---|---|---|---|---|---|---|
| Core layer<br>Polyamide resin (C) | wt% | 80 | 60 | 90 | 85 | 80 | 100 |
| Polyester resin (D2)<br>Polyester resin (A) | wt%<br>wt% | 20<br>- | 40<br>- | 10<br>- | 15<br>- | -<br>20 | -<br>- |
| Multilayer sheet vessel | | | | | | | |
| Overall thickness | μm | 357 | 355 | 415 | 384 | 403 | 402 |
| Thickness of core layer | μm | 48 | 42 | 52 | 50 | 47 | 50 |
| Ratio of mixed resin (B) | wt% | 13 | 11 | 12 | 12 | 11 | 11 |
| Haze value of bottom of vessel | % | 8.5 | 14 | 3.5 | 5.0 | 6.4 | 6.1 |
| YI | | 1.4 | 1.0 | 0.5 | 0.9 | 1.5 | 1.4 |
| Number of times of drop given until delamination was caused | Number of times | 44 | 36 | 34 | 37 | 33 | 17 |

INDUSTRIAL APPLICABILITY

The multilayer molding of the present invention has excellent transparency and gas barrier properties, wherein delamination due to drop or impact does not easily occur, and therefore it is suitably used as a vessel for various articles such as liquid beverages, seasonings, liquid-type foods, liquid-type pharmaceutical products and cosmetics.

**Claims**

1. A resin-made multilayer molding including three or more resin layers, wherein at least one resin layer of the multilayer molding is configured from a mixed resin (B) containing, at a ratio (C)/(D) = 99/1 to 10/90 by weight, a polyamide resin (C) obtained by polymerizing a diamine component containing 70 mol% or more of m-xylylenediamine and a dicarboxylic acid component containing 70 mol% or more of adipic acid, and a polyester resin (D) containing a dicarboxylic acid unit and a diol unit, 1 to 80 mol% of the diol unit having a cyclic acetal skeleton; and at least one resin layer in contact with a layer configured from the mixed resin (B) and the resin layers forming both the surfaces of the multilayer molding are configured from a resin containing 70 wt% or more of a thermoplastic polyester resin (A) obtained by polymerizing a dicarboxylic acid component containing 80 mol% or more of terephthalic acid and a diol component containing 80 mol% or more of ethylene glycol.

2. The multilayer molding according to claim 1, wherein the diol unit having the cyclic acetal skeleton of the polyester resin (D) is a diol unit derived from 3,9-bis(1,1-dimethyl-2-hydroxyethyl)-2,4,8,10-tetraoxaspiro[5.5]undecane or a diol unit derived from 5-methylol-5-ethyl-2-(1,1-dimethyl-2-hydroxyethyl)-1,3-dioxane.

3. The multilayer molding according to claim 1 or 2, wherein the diol unit other than the diol unit having the cyclic acetal skeleton of the polyester resin (D) is a diol unit derived from at least one diol selected from the group consisting of ethylene glycol, diethylene glycol, trimethylene glycol, 1,4-butanediol and 1,4-cyclohexanedimethanol.

4. The multilayer molding according to any one of claims 1 to 3, wherein the dicarboxylic acid unit of the polyester resin (D) is a dicarboxylic acid unit derived from at least one dicarboxylic acid selected from the group consisting of terephthalic acid, isophthalic acid, 1,4-naphthalenedicarboxylic acid, 1,5-naphthalenedicarboxylic acid, 2,6-naphthalenedicarboxylic acid and 2,7-naphthalenedicarboxylic acid.

5. The multilayer molding according to any one of claims 1 to 4, wherein the polyamide resin (C) is a solid phase polymerized polyamide resin obtained by melt-polycondensing the diamine component containing 70 mol% or more of m-xylylenediamine and the dicarboxylic acid component containing 70 mol% or more of adipic acid and further subjecting the obtained polyamide resin to solid phase polymerization.

6. The multilayer molding according to any one of claims 1 to 5, wherein the mixed resin (B) further contains 0.01 to 0.10 wt% of at least one metal element selected from the group consisting of a transition metal belonging to Group VIII of the periodic table, manganese, copper and zinc.

7. The multilayer molding according to any one of claims 1 to 6, comprising: an outer surface layer; an inner surface layer; and at least one core layer positioned between the outer surface layer and the inner surface layer, which is produced using an injection molding machine having a surface layer-side injection cylinder and a core side injection cylinder, and which is a hollow vessel obtained by blow-molding a multilayer parison, which is obtained by injecting the resin containing 70 wt% or more of the thermoplastic polyester resin (A) from the surface layer-side injection cylinder to form the outer surface layer and the inner surface layer and injecting the mixed resin (B) from the core side injection cylinder to form the at least one core layer.

8. The multilayer molding according to claim 7, which is a hollow vessel obtained by blow-molding a parison having a three-layer structure, which is formed by filling a mold cavity by: injecting the resin containing 70 wt% or more of the thermoplastic polyester resin (A) from the surface layer-side injection cylinder; then injecting the mixed resin (B) from the core side injection cylinder and injecting the thermoplastic polyester resin (A) from the surface layer-side injection cylinder at the same time; and then injecting the thermoplastic polyester resin (A) from the surface layer-side injection cylinder.

9. The multilayer molding according to claim 7, which is a hollow vessel obtained by blow-molding a parison having a five-layer structure, which is formed by filling a mold cavity by: injecting the resin containing 70 wt% or more of the thermoplastic polyester resin (A) from the surface layer-side injection cylinder; then injecting the mixed resin (B) from the core side injection cylinder; and then injecting the thermoplastic polyester resin (A) from the surface layer-side injection cylinder.

10. The multilayer molding according to any one of claims 7 to 9, which is a hollow vessel obtained by heating the surface of the parison to 80 to 120°C, followed by blow molding thereof.

11. The multilayer molding according to any one of claims 1 to 6, comprising: both surface layers; and at least one core layer positioned between the both surface layers, which is produced using a multilayer sheet-forming machine having at least one surface layer-side extrusion cylinder and at least one core side extrusion cylinder, and which is a multilayer sheet having a thickness of 100 to 2000 μm obtained by: extruding the resin containing 70 wt% or more of the thermoplastic polyester resin (A) from the surface layer-side extrusion cylinder, or the surface layer-side extrusion cylinder and at least one of the core side extrusion cylinder to form a resin layer; and extruding the mixed resin (B) from at least one of the core side extrusion cylinder to form the at least one core layer in contact with the resin layer made of resin containing the thermoplastic polyester resin (A).

12. The multilayer molding according to claim 11, which is a multilayer sheet having a three-layer structure obtained by extruding the resin containing 70 wt% or more of the thermoplastic polyester resin (A) from the surface layer-side extrusion cylinder and extruding the mixed resin (B) from the core side extrusion cylinder.

13. The multilayer molding according to claim 11, which is a multilayer sheet having a five-layer structure obtained by using a multilayer sheet-forming machine having a surface layer-side extrusion cylinder, an interlayer-side extrusion cylinder and a central layer-side extrusion cylinder, wherein: the resin containing 70 wt% or more of the thermoplastic polyester resin (A) is extruded from the surface layer-side extrusion cylinder; the mixed resin (B) is extruded from the interlayer-side extrusion cylinder or the central layer-side extrusion cylinder; and the resin containing 70 wt% or more of the thermoplastic polyester resin (A) is extruded from the interlayer-side extrusion cylinder or the central layer-side extrusion cylinder from which the mixed resin (B) is not extruded.

14. The multilayer molding according to any one of claims 11 to 13, which is a multilayer sheet vessel obtained by rapidly heating the surface of the multilayer sheet to 90 to 250°C to be softened and then molding the multilayer sheet using a mold having a desired shape.

## Patentansprüche

1. Ein Mehrschichtformteil aus Harz hergestellt, welches drei oder mehr Harzschichten beinhaltet, wobei mindestens eine Harzschicht des Mehrschichtformteils aus einem Harzgemisch (B) gebildet ist, das, in einem Verhältnis (C)/(D) = 99/1 bis 10/90, bezogen auf das Gewicht, ein Polyamidharz (C), erhalten durch Polymerisation einer Diamin-Komponente, die 70 Mol-% oder mehr m-Xylylendiamin enthält, und einer Dicarbonsäure-Komponente, die 70 Mol-% oder mehr Adipinsäure enthält, und ein Polyesterharz (D), das eine Dicarbonsäure-Einheit und eine Diol-Einheit enthält, wobei 1 bis 80 Mol-% der Diol-Einheit ein cyclisches Acetalgerüst aufweisen, enthält; und mindestens eine Harzschicht, die mit einer aus dem Harzgemisch (B) gebildeten Schicht in Kontakt ist, und die Harzschichten, die beide Oberflächen des Mehrschichtformteils bilden, aus einem Harz gebildet sind, das 70 Gew.-% oder mehr eines thermoplastischen Polyesterharzes (A), erhalten durch Polymerisation einer Dicarbonsäure-Komponente, die 80 Mol-% oder mehr Terephthalsäure enthält, und einer Diol-Komponente, die 80 Mol-% oder mehr Ethylenglycol enthält, enthält.

2. Das Mehrschichtformteil nach Anspruch 1, wobei die Diol-Einheit mit dem cyclischen Acetalgerüst des Polyesterharzes (D) eine von 3,9-Bis(1,1-dimethyl-2-hydroxyethyl)-2,4,8,10-tetraoxaspiro[5.5]undecan abgeleitete Diol-Einheit oder eine von 5-Methylol-5-ethyl-2-(1,1-dimethyl-2-hydroxyethyl)-1,3-dioxan abgeleitete Diol-Einheit ist.

3. Das Mehrschichtformteil nach Anspruch 1 oder 2, wobei die Diol-Einheit, die sich von der Diol-Einheit mit dem cyclischen Acetalgerüst des Polyesterharzes (D) unterscheidet, eine Diol-Einheit ist, die von mindestens einem Diol, ausgewählt aus der Gruppe bestehend aus Ethylenglycol, Diethylenglycol, Trimethylenglycol, 1,4-Butandiol und 1,4-Cyclohexandimethanol, ausgewählt ist.

4. Das Mehrschichtformteil nach einem der Ansprüche 1 bis 3, wobei die Dicarbonsäure-Einheit des Polyesterharzes (D) eine Dicarbonsäure-Einheit ist, die von mindestens einer Dicarbonsäure, ausgewählt aus der Gruppe bestehend aus Terephthalsäure, Isophthalsäure, 1,4-Naphthalindicarbonsäure, 1,5-Naphthalindicarbonsäure, 2,6-Naphthalindicarbonsäure und 2,7-Naphthalindicarbonsäure, abgeleitet ist.

5. Das Mehrschichtformteil nach einem der Ansprüche 1 bis 4, wobei das Polyamidharz (C) ein Festphasen-polymerisiertes Polyamidharz ist, das durch Schmelzpolykondensation der Diamin-Komponente, die 70 Mol-% oder mehr m-Xylylendiamin enthält, und der Dicarbonsäure-Komponente, die 70 Mol-% oder mehr Adipinsäure enthält, und weiteres Unterziehen des erhaltenen Polyamidharzes einer Festphasen-Polymerisation erhalten wird.

6. Das Mehrschichtformteil nach einem der Ansprüche 1 bis 5, wobei das Harzgemisch (B) weiter 0,01 bis 0,10 Gew.-% mindestens eines Metallelements enthält, ausgewählt aus der Gruppe bestehend aus einem Übergangsmetall, das zur Gruppe VIII des Periodensystems gehört, Mangan, Kupfer und Zink.

7. Das Mehrschichtformteil nach einem der Ansprüche 1 bis 6, umfassend: eine äußere Oberflächenschicht, eine innere Oberflächenschicht; und mindestens eine Kernschicht, angeordnet zwischen der äußeren Oberflächenschicht und der inneren Oberflächenschicht, welches unter Verwendung einer Spritzgießmaschine mit einem Oberflächenschichtseiten-Einspritzzylinder und einem Kernseiten-Einspritzzylinder hergestellt wird und bei welchem es sich um ein Hohlgefäß handelt, das durch Blasformen eines Mehrschicht-Vorformlings erhalten wird, welcher durch Einspritzen des Harzes, das 70 Gew.-% oder mehr des thermoplastischen Polyesterharzes (A) enthält, aus dem Oberflächenschichtseiten-Einspritzzylinder, um die äußere Oberflächenschicht und die innere Oberflächenschicht zu bilden, und Einspritzen des Harzgemisches (B) aus dem Kernseiten-Einspritzzylinder, um die mindestens eine Kernschicht zu bilden, erhalten wird.

8. Das Mehrschichtformteil nach Anspruch 7, bei welchem es sich um ein Hohlgefäß handelt, erhalten durch Blasformen eines Vorformlings mit einer Dreischichtstruktur, welcher durch Füllen eines Formhohlraums durch: Einspritzen des Harzes, das 70 Gew.- % oder mehr des thermoplastischen Polyesterharzes (A) enthält, aus dem Oberflächenschichtseiten-Einspritzzylinder; dann gleichzeitiges Einspritzen des Harzgemisches (B) aus dem Kernseiten-Einspritzzylinder und Einspritzen des thermoplastischen Polyesterharzes (A) aus dem Oberflächenschichtseiten-Einspritzzylinder; und dann Einspritzen des thermoplastischen Polyesterharzes (A) aus dem Oberflächenschichtseiten-Einspritzzylinder gebildet wird.

9. Das Mehrschichtformteil nach Anspruch 7, bei welchem es sich um ein Hohlgefäß handelt, erhalten durch Blasformen eines Vorformlings mit einer Fünfschichtstruktur, welcher durch Füllen eines Formhohlraums durch: Einspritzen des Harzes, das 70 Gew.- % oder mehr des thermoplastischen Polyesterharzes (A) enthält, aus dem Oberflächenschichtseiten-Einspritzzylinder; dann Einspritzen des Harzgemisches (B) aus dem Kernseiten-Einspritzzylinder; und dann Einspritzen des thermoplastischen Polyesterharzes (A) aus dem Oberflächenschichtseiten-Einspritzzylinder gebildet wird.

**10.** Das Mehrschichtformteil nach einem der Ansprüche 7 bis 9, bei welchem es sich um ein Hohlgefäß handelt, erhalten durch Erwärmen der Oberfläche des Vorformlings auf 80 bis 120°C, gefolgt von Blasformen desselben.

**11.** Das Mehrschichtformteil nach einem der Ansprüche 1 bis 6, umfassend: beide Oberflächenschichten; und mindestens eine Kernschicht, angeordnet zwischen den beiden Oberflächenschichten, welches unter Verwendung eines Mehrschichtbahnenformgebungsapparats mit mindestens einem Oberflächenschichtseiten-Extrusionszylinder und mindestens einem Kernseiten-Extrusionszylinder hergestellt wird und bei welchem es sich um eine Mehrschichtbahn mit einer Dicke von 100 bis 2000 μm handelt, erhalten durch: Extrudieren des Harzes, das 70 Gew.-% oder mehr des thermoplastischen Polyesterharzes (A) enthält, aus dem Oberflächenschichtseiten-Extrusionszylinder, oder dem Oberflächenschichtseiten-Extrusionszylinder und mindestens einem der Kernseiten-Extrusionszylinder, um eine Harzschicht zu bilden; und Extrudieren des Harzgemisches (B) aus mindestens einem der Kernseiten-Extrusionszylinder, um die mindestens eine Kernschicht, die mit der Harzschicht, die aus Harz hergestellt wird, das das thermoplastische Polyesterharz (A) enthält, in Kontakt ist, zu bilden.

**12.** Das Mehrschichtformteil nach Anspruch 11, bei welchem es sich um eine Mehrschichtbahn mit einer Dreischichtstruktur handelt, erhalten durch Extrudieren des Harzes, das 70 Gew.-% oder mehr des thermoplastischen Polyesterharzes (A) enthält, aus dem Oberflächenschichtseiten-Extrusionszylinder und Extrudieren des Harzgemisches (B) aus dem Kernseiten-Extrusionszylinder.

**13.** Das Mehrschichtformteil nach Anspruch 11, bei welchem es sich um eine Mehrschichtbahn mit einer Fünfschichtstruktur handelt, erhalten unter Verwendung eines Mehrschichtbahnenformgebungsapparats mit einem Oberflächenschichtseiten-Extrusionszylinder, einem Zwischenschichtseiten-Extrusionszylinder und einem Zentralschichtseiten-Extrusionszylinder, wobei: das Harz, das 70 Gew.-% oder mehr des thermoplastischen Polyesterharzes (A) enthält, aus dem Oberflächenschichtseiten-Extrusionszylinder extrudiert wird; das Harzgemisch (B) aus dem Zwischenschichtseiten-Extrusionszylinder oder dem Zentralschichtseiten-Extrusionszylinder extrahiert wird; und das Harz, das 70 Gew.-% oder mehr des thermoplastischen Polyesterharzes (A) enthält, aus dem Zwischenschichtseiten-Extrusionszylinder oder dem Zentralschichtseiten-Extrusionszylinder, aus dem das Harzgemisch (B) nicht extrudiert wird, extrudiert wird.

**14.** Das Mehrschichtformteil nach einem der Ansprüche 11 bis 13, bei welchem es sich um einen Mehrschichtbahnengefäß handelt, das durch schnelles Erwärmen der zu erweichenden Oberfläche der Mehrschichtbahn auf 90 bis 250°C und dann Formgebung der Mehrschichtbahn unter Verwendung eines Formwerkzeuges mit einer gewünschten Form erhalten wird.

## Revendications

**1.** Pièce moulée multicouche faite en résine comprenant trois ou plus de trois couches de résine, dans laquelle au moins une couche de résine de la pièce moulée multicouche est configurée à partir d'une résine mixte (B) contenant, en un rapport (C)/(D) de 99/1 à 10/90 en poids, une résine de polyamide (C) obtenue par polymérisation d'un composant diamine contenant 70 % en moles ou plus de m-xylylènediamine et d'un composant acide dicarboxylique contenant 70 % en moles ou plus d'acide adipique, et une résine de polyester (D) contenant une unité acide dicarboxylique et une unité diol, 1 à 80 % en moles de l'unité diol ayant un squelette d'acétal cyclique ; et au moins une couche de résine en contact avec une couche configurée à partir de la résine mixte (B) et les couches de résine formant les deux surfaces de la pièce moulée multicouche sont configurées à partir d'une résine contenant 70 % en poids ou plus d'une résine de polyester thermoplastique (A) obtenue par polymérisation d'un composant acide dicarboxylique contenant 80 % en moles ou plus d'acide téréphtalique et d'un composant diol contenant 80 % en moles ou plus d'éthylène glycol.

**2.** Pièce moulée multicouche selon la revendication 1, dans laquelle l'unité diol ayant le squelette d'acétal cyclique de la résine de polyester (D) est une unité diol dérivée de 3,9-bis(1,1-diméthyl-2-hydroxyéthyl)-2,4,8,10-tétraoxaspiro[5.5]undécane ou une unité diol dérivée de 5-méthylol-5-éthyl-2-(1,1-diméthyl-2-hydroxyéthyl)-1,3-dioxane.

**3.** Pièce moulée multicouche selon la revendication 1 ou 2, dans laquelle l'unité diol autre que l'unité diol ayant un

squelette d'acétal cyclique de la résine de polyester (D) est une unité diol dérivée d'au moins un diol choisi dans le groupe constitué par l'éthylène glycol, le diéthylène glycol, le triméthylène glycol, le 1,4-butanediol et le 1,4-cyclohexanediméthanol.

**4.** Pièce moulée multicouche selon l'une quelconque des revendications 1 à 3, dans laquelle l'unité acide dicarboxylique de la résine de polyester (D) est une unité acide dicarboxylique dérivée d'au moins un acide dicarboxylique choisi dans le groupe constitué par l'acide téréphtalique, l'acide isophtalique, l'acide 1,4-naphtalènedicarboxylique, l'acide 1,5-naphtalènedicarboxylique, l'acide 2,6-naphtalènedicarboxylique et l'acide 2,7-naphtalènedicarboxylique.

**5.** Pièce moulée multicouche selon l'une quelconque des revendications 1 à 4, dans laquelle la résine de polyamide (C) est une résine de polyamide polymérisée en phase solide obtenue par polycondensation à l'état fondu du composant diamine contenant 70 % en moles ou plus de m-xylylènediamine et du composant acide dicarboxylique contenant 70 % en moles ou plus d'acide adipique, et en outre soumission de la résine de polyamide obtenue à une polymérisation en phase solide.

**6.** Pièce moulée multicouche selon l'une quelconque des revendications 1 à 5, dans laquelle la résine mixte (B) contient en outre 0,01 à 0,10 % en poids d'au moins un élément métallique choisi dans le groupe constitué par un métal de transition appartenant au Groupe VIII du Tableau Périodique, le manganèse, le cuivre et le zinc.

**7.** Pièce moulée multicouche selon l'une quelconque des revendications 1 à 6, comprenant : une couche de surface extérieure ; une couche de surface intérieure ; et au moins une couche de cœur positionnée entre la couche de surface extérieure et la couche de surface intérieure, qui est produite en utilisant une machine de moulage par injection ayant un cylindre d'injection du côté couche de surface et un cylindre d'injection du côté cœur, et qui est un récipient creux obtenu par moulage-soufflage d'une paraison multicouche, qui est obtenue par injection de la résine contenant 70 % en poids ou plus de la résine de polyester thermoplastique (A) à partir du cylindre d'injection du côté couche de surface pour former la couche de surface extérieure et la couche de surface intérieure et injection de la résine mixte (B) à partir du cylindre d'injection du côté cœur pour former l'au moins une couche de cœur.

**8.** Pièce moulée multicouche selon la revendication 7, qui est un récipient creux obtenu par moulage-soufflage d'une paraison ayant une structure à trois couches, qui est formée par remplissage d'une cavité de moule par : injection de la résine contenant 70 % en poids ou plus de la résine de polyester thermoplastique (A) à partir du cylindre d'injection du côté couche de surface ; puis injection de la résine mixte (B) à partir du cylindre d'injection du côté cœur et injection de la résine de polyester thermoplastique (A) à partir du cylindre d'injection du côté couche de surface en même temps ; et ensuite injection de la résine de polyester thermoplastique (A) à partir du cylindre d'injection du côté couche de surface.

**9.** Pièce moulée multicouche selon la revendication 7, qui est un récipient creux obtenu par moulage-soufflage d'une paraison ayant une structure à cinq couches, qui est formée par remplissage d'une cavité de moule par : injection de la résine contenant 70 % en poids ou plus de la résine de polyester thermoplastique (A) à partir du cylindre d'injection du côté couche de surface ; puis injection de la résine mixte (B) à partir du cylindre d'injection du côté coeur ; et ensuite injection de la résine de polyester thermoplastique (A) à partir du cylindre d'injection du côté couche de surface.

**10.** Pièce moulée multicouche selon l'une quelconque des revendications 7 à 9, qui est un récipient creux obtenu par chauffage de la surface de la paraison à une température de 80 à 120 °C, suivi d'un moulage-soufflage de celle-ci.

**11.** Pièce moulée multicouche selon l'une quelconque des revendications 1 à 6, comprenant : les deux couches de surface ; et au moins une couche de cœur positionnée entre les deux couches de surface, qui est produit en utilisant une machine de formation de feuille multicouche ayant au moins un cylindre d'extrusion du côté couche de surface et au moins un cylindre d'extrusion du côté cœur, et qui est une feuille multicouche ayant une épaisseur de 100 à 2000 μm obtenue par : extrusion de la résine contenant 70 % en poids ou plus de la résine de polyester thermoplastique (A) à partir du cylindre d'extrusion du côté couche de surface, ou du cylindre d'extrusion du côté couche de surface et d'au moins le cylindre d'extrusion du côté cœur pour former une couche de résine ; et extrusion de la résine mixte (B) à partir d'au moins le cylindre d'extrusion du côté cœur pour former l'au moins une couche de cœur en contact avec la couche de résine faite de résine contenant la résine de polyester thermoplastique (A).

**12.** Pièce moulée multicouche selon la revendication 11, qui est une feuille multicouche ayant une structure à trois couches obtenue par extrusion de la résine contenant 70 % en poids ou plus de la résine de polyester thermoplastique

(A) à partir du cylindre d'extrusion du côté couche de surface et extrusion de la résine mixte (B) à partir du cylindre d'extrusion du côté cœur.

**13.** Pièce moulée multicouche selon la revendication 11, qui est une feuille multicouche ayant une structure à cinq couches obtenue en utilisant une machine de formation de feuille multicouche ayant un cylindre d'extrusion du côté couche de surface, un cylindre d'extrusion du côté couche intermédiaire et un cylindre d'extrusion du côté couche centrale, dans laquelle : la résine contenant 70 % en poids ou plus de la résine de polyester thermoplastique (A) est extrudée à partir du cylindre d'extrusion du côté couche de surface ; la résine mixte (B) est extrudée à partir du cylindre d'extrusion du côté couche intermédiaire ou du cylindre d'extrusion du côté couche centrale ; et la résine contenant 70 % en poids ou plus de la résine de polyester thermoplastique (A) est extrudée à partir du cylindre d'extrusion du côté couche intermédiaire ou du cylindre d'extrusion du côté couche centrale à partir duquel la résine mixte (B) n'est pas extrudée.

**14.** Pièce moulée multicouche selon l'une quelconque des revendications 11 à 13, qui est un récipient en feuille multicouche obtenu par chauffage rapide de la surface de la feuille multicouche à une température de 90 à 250 °C pour qu'elle ramollisse, et ensuite moulage de la feuille multicouche par utilisation d'un moule ayant une forme souhaitée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000254963 A
- JP 3788442 B
- JP 2007223667 A
- WO 2003043819 A
- JP 2006111718 A